# EUROPÄISCHE PATENTSCHRIFT

(11) **EP 1 827 823 B1**
(45) Veröffentlichungstag und Bekanntmachung des Hinweises auf die Patenterteilung: **13.01.2010**
(21) Anmeldenummer: 05815471.7
(22) Anmeldetag: 16.12.2005
(51) Int. Cl.: B32B 27/10, B32B 27/34, B32B 29/00, B32B 37/30, B42D 15/00, D21H 21/42

(54) **MEHRSCHICHTAUFBAU ALS DRUCKSUBSTRAT SOWIE VERFAHREN ZU DESSEN HERSTELLUNG**
MULTILAYER STRUCTURE AS A PRINTING SUBSTRATE, AND METHOD FOR THE PRODUCTION THEREOF
STRUCTURE MULTICOUCHE SERVANT DE SUBSTRAT D'IMPRESSION ET PROCEDE DE FABRICATION

(30) Priorität: 23.12.2004 CH 213904
(43) Veröffentlichungstag der Anmeldung: 05.09.2007
(60) Teilanmeldung: 09175638.7
(73) Patentinhaber: Landqart, 7302 Landquart (CH)
(72) Erfinder: GROB, Jakob, CH-7303 Mastrils (CH); KOCHER, Christopg, CH-8057 Zürich (CH)
(74) Vertreter: Bremi, Tobias Hans
(86) Internationale Anmeldenummer: PCT/CH2005/000754
(87) Internationale Veröffentlichungsnummer: WO 2006/066431

(56) Entgegenhaltungen:
- WO-A-2004/076198
- DE-C1- 4 334 848
- US-A- 4 629 638
- US-A- 5 393 099
- US-A1- 2002 176 973

## Beschreibung

### TECHNISCHES GEBIET

Beschrieben wird ein Mehrschichtsubstrat sowie ein Verfahren zur Herstellung eines solchen Mehrschichtsubstrates, welches insbesondere als Druckträger z.B. als Sicherheitsdokument Verwendung finden kann. Das Mehrschichtsubstrat umfasst wenigstens eine erste Papierlage, wenigstens eine zweite Papierlage, sowie wenigstens eine, zwischen den Papierlagen angeordnete und mit den Papierlagen verbundene Kunststoffschicht aus wenigstens einem thermoplastischen polymeren Material. Das vorgeschlagene flächige Substrat kann beispielsweise als Druckträger, insbesondere als Sicherheitspapier, aber auch als Verpackungsmaterial, Abdeckungsmaterial, Kartensubstrat, etc. Verwendung finden.

### STAND DER TECHNIK

Drucksubstrate für Wertdokumente wie beispielsweise Banknoten sind einer ständigen Weiterentwicklung unterworfen, um den ebenfalls stetig wachsenden Bedürfnissen an Fälschungssicherheit entsprechen zu können. Von besonderem Interesse ist dabei, Sicherheiten zu schaffen, die im täglichen Gebrauch vom Benutzer ohne weitere technische Hilfsmittel zu erkennen sind, in ihrer Art und Weise aber nicht ohne weiteres imitiert werden können. Ein solches Merkmal ist beispielsweise das Multiton-Wasserzeichen, wie es in Sicherheitspapieren traditionellerweise findet und als Standard etabliert ist.

Im ständigen Bestreben nach weiterentwickelten Substraten für Banknoten sind neben den bekannten Sicherheitspapieren auch schon alternative Materialien als Trägermaterial zur Anwendung gekommen. So wurden beispielsweise in Australien ab 1988 Banknoten eingeführt, bei denen eine Polymerfolie als Drucksubstrat dient. Solche Polymer-Banknoten besitzen gegenüber klassischen papier-basierten Banknoten diverse Vorzüge, wie beispielsweise höhere Reissfestigkeit oder höhere Resistenz gegenüber Verschmutzung. Allerdings haben Polymer-Banknoten im Bezug auf die Fälschungssicherheit einige gewichtige Nachteile gegenüber Banknoten aus Sicherheitspapieren zu verzeichnen. Insbesondere ist es nicht möglich, echte Wasserzeichen in diesen Substraten unterzubringen. Auch andere, etablierte, in Papiersubstraten angewandte und vom Verbraucher anerkannte Merkmale wie Melierfasern, Planchetten oder Sicherheitsfäden lassen sich in Polymer-Banknoten nicht realisieren. Ebenfalls fehlt der für papierbasierten Banknoten typische charakteristische Griff und Klang, welcher oft als deutliches Erkennungskriterium für echte Banknoten dient. Die Wichtigkeit der Taktilität bei Unterscheidung von echten und unechten Banknoten wurde beispielsweise von der Bank of Canada untersucht und in SPIE Vol. 5310, Optical Security and Counterfeit Deterrence Techniques V, Analysis of Counterfeits and Public Survey Results as Design Input, p. 63 ff, ausgeführt.

Um die Vorteile beider Banknotensubstrate zu kombinieren, sind schon Kombinationen der beiden Materialien vorgeschlagen worden. So beschreibt beispielsweise die EP 0 628 408 ein Substrat, welches aus einer bedruckten Folie besteht, auf die beidseitig ein Sicherheitspapier mit Hilfe eines Adhäsivs auflaminiert wird. Der Zweck solcher Erfindungen liegt jeweils unter Anderem darin, zwischen den beiden Schichten zusätzliche Sicherheitsmerkmale, insbesondere als Druck, integrieren zu können und zwei Papierschichten zu verbinden.

In der WO2004/028825 wird ein Aufbau vorgeschlagen, bei dem ein Sicherheitspapier oberflächlich mit einer Folie versehen wird. In einer möglichen Ausführungsform wird zwischen zwei Folien eine fensterartig durchbrochene Papierbahn vorgesehen. Der Zweck dieser Erfindung liegt darin, die Papieroberfläche beidseitig auf diese Art vor Verschmutzung zu schützen.

Polymerbanknoten besitzen neben der genannten verbesserten Dauerhaftigkeit verglichen mit herkömmlichen Papierbanknoten eine Möglichkeit zur zusätzlichen Absicherung gegen Nachahmungen, die sich mit klassischen Papiersubstraten nicht realisieren lässt. Indem das ursprünglich transparente Polymersubstrat gezielt in gewissen Bereichen nicht oder nur partiell bedruckt wird, ergeben sich transparente Bereiche - so genannte Fenster - die als wertvoller Schutz gegen einfachere und weit verbreitete Reproduktionsmethoden angesehen werden. Diese Sichtfenster werden als so genannte Erststufen-Merkmale eingestuft, welche sich definitionsgemäss vom Benutzer ohne Zuhilfenahme zusätzlicher Gerätschaften verifizieren lassen. Da die Überprüfung des Sichtfensters in besonders diskreter Art und Weise und mitunter sogar unbewusst vorgenommen werden kann, wird dieses Merkmal von vielen Zentralbanken prinzipiell als äusserst effektiv eingeschätzt. Auch wird mit transparenten Bereichen die Möglichkeit eröffnet, neuartige Sicherheitsmerkmale, welche für ihre Funktion auf ein transparentes Trägermaterial angewiesen sind, anzuwenden.

Das Substrat, mit welchem Banknoten mit solchen Sichtfenstern in den bekannten Fällen realisiert werden, hat aber in Bezug auf die Sicherheit gewichtige Nachteile zu verzeichnen. Der charakteristische Griff und Klang einer papierbasierten Banknote - oft die wichtigste Eigenschaft bei der Erkennung unechter Noten - fehlen gänzlich und lassen sich nicht nachstellen.

Das geschätzte, auch beim Benutzer bekannte und nach wie vor äusserst sichere Wasserzeichen lässt sich in Polymersubstraten ebenfalls nicht realisieren und nur unbefriedigend durch Druckverfahren nachstellen - ein umstrittenes Vorgehen, da durch Druck imitiere Wasserzeichen eine Banknote üblicherweise als Fälschung entlarven. Weitere, in der Öffentlichkeit ebenfalls bekannte Sicherheitsmerkmale wie Sicherheitsfaden und Melierfasern lassen sich in Polymersubstraten ebenfalls nicht realisieren oder allenfalls in unbefriedigender und wie oben erwähnt zweifelhafter Art und Weise durch Druckverfahren nachstellen.

Als weiterer Nachteil der Polymerbanknoten ist anzusehen, dass sich diese nicht in gewohnter Weise falten lassen, da sie spontan zurückfedern. Beim eindringlicheren Versuch, eine Polymer-Banknote zu falten, wird ein Falz erzielt, der sich nicht mehr zurückbildet. Im Bereich der Falzkante geht typischerweise die Bedruckung verloren, ebenso wird die Druckfarbe durch den Gebrauch in für Banknoten unüblicher Art und Weise rasch abgenutzt. Als weiterer Nachteil ist die Tatsache anzusehen, dass es sich beim Polymersubstrat in den bekannten Fällen um gerecktes Polypropylen handelt, ein Material, das in unzähligen Produkten des alltäglichen Gebrauchs wie Verpackungsfolien, Klarsichtfolien, Dichtungsfolien etc. in ähnlicher Qualität Verwendung findet und dadurch einem potentiellen Fälscher in einfacher Weise für Imitationen zur Verfügung steht. Die Tatsache, dass es sich beim verwendeten Substrat um eine gereckte Folie handelt, erweist sich insbesondere dann als nachteilig, wenn das Substrat erhöhten Temperaturen, wie sie aber im täglichen Gebrauch durchaus auftreten können, ausgesetzt wird. In der Nähe einer heissen Herdplatte oder aber auch unter einer Halogenlampe kann es durchaus vorkommen, dass eine solche Polymerbanknote zusammenschrumpft.

Aus all diesen Gründen haben Banknoten auf Polymersubstrat bisher keine grosse Bedeutung erlangt und wurden teilweise sogar kurz nach erfolgter Einführung wiederum durch klassische, auf Papiersubstrat basierende Banknoten ersetzt.

Im Bestreben ohne die genannten Nachteile dennoch das geschätzte und als Sicherheitsmerkmal hoch eingestufte Sichtfenster zu realisieren, wurden diverse Anstrengungen unternommen, ein solches Sichtfenster auch in einem Papiersubstrat zu erhalten.

So beschreibt beispielsweise die DE 43 34 848 einen Papierträger mit einer fensterartigen Durchbrechung, die mit einer transparenten Abdeckfolie verschlossen ist.

Ein andere Ansatz ist in der WO 03/085193 beschrieben. Dort wird ein Sicherheitsband im Papierformungsprozess so in ein Sicherheitspapier eingearbeitet, dass Sichtabschnitte im Wertdokument ausgebildet werden. Beiden Ansätzen ist gemein, dass sich die Sichtfenster nur in einem definierten Streifenbereich realisieren lassen, der sich aus dem Prozess durch die Zuführung von Abdeckfolie respektive Sicherheitsband in Laufrichtung ergeben. In diesen Bereichen unterscheidet sich das Substrat in Dicke und mechanischen Eigenschaften von den übrigen Bereichen, was sowohl bei Verarbeitung wie im Gebrauch störend wirken kann.

Einen wiederum anderen Ansatz verfolgt demgegenüber die WO2004/076198, welche ein Mehrschichtlaminat aus Papierlagen und Folienlagen beschreibt, bei dem die Papierlagen in einer bevorzugten Ausführungsform durchgängige Aussparungen aufweisen, wodurch sich im Laminat die gewünschten Sichtfenster ergeben. Der Vorteil eines solchen Schichtaufbaus liegt darin, dass sich die Sichtfenster an beliebigen Stellen und in beliebiger Anzahl im Dokument realisieren lassen. Die Verbindung von Papierlagen und Folie erfolgt in einem Laminationsprozess, bei dem explizit auf jegliche Art von Adhäsiv verzichtet wird. Bei diesem Vorschlag handelt es sich um einen technologisch eleganten Ansatz, der allerdings u.U. gewisse wirtschaftliche und prozesstechnische Schwierigkeiten in sich birgt. Insbesondere ist die prozessbedingt unumgängliche Erwärmung der Papierlagen über die Erweichungstemperatur der Polymerfolie u.U. nachteilig für die Eigenschaften des Produktes. Die Papierlagen werden in diesem Prozess stark entfeuchtet, neigen zur Vergilbung oder gar zur Pergamentisierung, was sich nachteilig auf die optischen Eigenschaften (Nuance, Opazität) sowie die mechanischen Eigenschaften (Versprödung, Doppelfalzzahl) auswirken kann. Als weiterer Nachteil des Prozesses ist anzusehen, dass im Fall von Durchbrechungen in den zwei Papierlagen, in welchen die Polymerfolie von einer oder beiden Seiten her frei zugänglich ist und somit ein entweder einseitig überdecktes oder aber ein volltransparentes Sichtfenster ausgebildet wird, die Polymerfolie auf dieselbe Temperatur wie der restliche Verbund erhitzt wird. Bei dieser Temperatur ist i.d.R. eine erhöhte Fliessfähigkeit des Polymers gegeben, so dass es zu ausreichendem Eindringen in die Papierlagen unter Ausbildung einer Penetrationszone kommt. Unter diesen Bedingungen hat das Polymer naturgemäss ebenfalls eine erhöhte Affinität zu den Apparateteilen (Walzen, Carrierbänder) des Laminators, welche dieselbe oder sogar eine höhere Temperatur als jene des Polymers besitzen, was zum Kleben der Polymerfolie auf den Apparateteilen und zum Abbilden etwaiger Oberflächenstrukturen führen kann.

### DARSTELLUNG DER ERFINDUNG

Der Erfindung liegt demnach die Aufgabe zugrunde, einen im Vergleich zum Stand der Technik verbesserten Druckträger insbesondere zur Verwendung als Sicherheitspapier, zur Verfügung zu stellen, sowie ein Verfahren zu dessen Herstellung. Konkret geht es darum, ein Mehrschichtsubstrat zur Verfügung zu stellen sowie ein Verfahren zu dessen Herstellung, wobei das Mehrschichtsubstrat wenigstens eine erste Papierlage, wenigstens eine zweite Papierlage, sowie wenigstens eine, zwischen den Papierlagen angeordnete und mit den Papierlagen verbundene Kunststoffschicht aus wenigstens einem thermoplastischen polymeren Material umfasst. Bevorzugtermassen geht es darum, ein Mehrschichtsubstrat zur Verfügung zu stellen sowie ein Verfahren zu dessen Herstellung, wobei das Mehrschichtsubstrat wenigstens eine erste Papierlage, wenigstens eine zweite Papierlage, sowie wenigstens eine, zwischen den Papierlagen angeordnete und mit den Papierlagen verbundene Kunststoffschicht aus wenigstens einem thermoplastischen polymeren Material umfasst, wobei wenigstens eine der Papierlagen durchgehende Durchbrechungen aufweist, welche durch die Kunststoffschicht vollumfänglich überspannt wird.

Die Lösung dieser Aufgabe wird dadurch erreicht, dass die Kunststoffschicht in schmelzflüssigem Zustand zwischen die Papierlagen zugeführt wird, und die Papierlagen anschliessend zwischen einem Walzenpaar in einem kontinuierlichen Prozess gepresst werden, wobei das Walzenpaar auf einer Temperatur oberhalb der Raumtemperatur aber unterhalb der Temperatur der zugeführten Schmelze der für die Kunststoffschicht verwendeten Materialien gehalten wird, und wobei eine stoffschlüssige Verbindung zwischen den Papierlagen und der Kunststoffschicht unter Ausbildung einer Penetrationszone, in welcher Teile der Kunststoffschicht mit der Masse des Faserverbundes der Papierlagen verbunden sind, ergibt, und wobei die Kunststoffschicht mehr als 20 g/m² und höchstens 100 g/m² Flächengewicht aufweist.

Der Kern der Erfindung besteht somit darin, eine Kunststoffschicht derart zwischen zwei Papierschichten zu bringen, dass eine innige Verbindung zwischen den Papierschichten hergestellt werden kann, ohne dabei Adhäsive zu verwenden, da Letztere häufig in Bezug auf Sicherheit (geklebte Laminate können an den Klebeschichten aufgetrennt werden) nachteilig sind. Weiterhin soll gleichzeitig die Kunststoffschicht eine stabilisierende und tragende Funktion übernehmen, das heisst die Kunststoffschicht dient nicht nur als Haftvermittler zwischen den beiden Papierschichten, sondern verstärkt das Mehrschichtsubstrat als Ganzes. Dies bedeutet, dass sich z.B. die Doppelfalzzahlen im Vergleich zu reinen Papiersubstraten extrem erhöhen, und somit ein Mehrschichtsubstrat zur Verfügung gestellt wird, welches wesentlich länger haltbar ist selbst bei intensivem Gebrauch. Dies wird ermöglicht durch eine Dicke der Kunststoffschicht von mehr als 20 g/m². Um trotzdem papierartige haptische Eigenschaften zu haben, sollte die Kunststoffschicht nicht dicker als 100 g/m² sein.

Aus einem völlig anderen Gebiet ist bekannt, dass Mehrschichtlaminate aus Papier mit innenliegender Polymerschicht auch erhalten werden können, indem das Polymer in schmelzflüssiger Form in einem Extrusionsbeschichtungsverfahren zwischen zwei Papierlagen eingetragen wird. Eine solche Lösung wird beispielsweise in der US2002/0176973A1 beschrieben. In dieser Schrift aus einem anderen technischen Gebiet wird ein Laminat mit verbesserter Dimensionsstabilität bei schwankender Luftfeuchtigkeit beschrieben, dass aus zwei Lagen Papier mit einer innenliegenden Lage Polymer besteht, wobei die Polymerlage aber in jedem Fall dicker ausgestaltet ist, als jede der beiden Papierlagen.

Da dieses Beispiel aus einem anderen technischen Gebiet stammt, sind auch die Produkteigenschaften wesentlich verschieden von den Eigenschaften, die für den Erfindungsgegenstand angestrebt werden. Beispielsweise werden keine Sicherheitspapiere, insbesondere keine Wasserzeichenpapiere verwendet, welche sich in ihren Festigkeitswerten und optischen sowie haptischen Eigenschaften ganz wesentlich von den in der US2002/0176973A1 verwendeten Kraftpapieren und Tissuepapieren unterscheiden. Weiter handelt es sich bei den bevorzugten Polymeren der US2002/0176973A1 um Polyolefine, welche aufgrund ihres hydrophoben Charakters eine geringe Affinität zu Papier besitzen. Dementsprechend dringt das Polymer auch nicht in die Papierlagen ein (vgl. US2002/0176973A1 Abschnitt 0040 und Fig. 1/Fig. 2), d.h. Penetrationszonen im Sinne der vorliegenden Erfindung werden in der US2002/0176973A1 zweifelsfrei nicht ausgebildet. Die Ausbildung einer Penetrationszone, in welcher das Polymer zumindest teilweise in den Faserverbund der Papierlage eindringt, ist aber ein wesentliches Merkmal der vorliegenden Erfindung und gerade für Sicherheitsanwendungen von grösster Wichtigkeit. Dies wird u. a. durch temperieren der Laminatorwalzen erreicht, welche demgegenüber im Fall des Dokumentes aus dem Stand der Technik US2002/0176973A1 auf Temperaturen von 15-30°C gekühlt werden (vgl. US2002/0176973A1, Abschnitt 0046).

Im Gegensatz zu der vorliegenden Erfindung, welche ein Mehrschichtsubstrat anstrebt, welches sich in seinen haptischen Eigenschaften wenig von herkömmlichem Sicherheitspapier unterscheidet, wird bei der US200201796973A1 erfindungsgemäss ein Verbund erzielt, der auf Grund der relativ dicken Zwischenlage aus Polymer steifer und fester ist als ein gewöhnliches Papier derselben Dicke.

Gemäss einer ersten bevorzugten Ausführungsform hat die Kunststoffschicht ein Flächengewicht von 25-80g/m². Ganz besonders bevorzugt wird ein Flächengewicht von 25-40 g/m². Gerade letzterer Bereich erweist sich als aussergewöhnlich vorteilhaft, da einerseits eine genügende tragende und stabilisierende Funktion der Kunststoffschicht gewährleistet ist, und da gleichzeitig beispielsweise bei Verwendung von zwei gleichen Papierlagen der Dicke von 20-50 g/m², ein haptisches Verhalten erreicht wird, welches sich kaum von einem normalen Papier von einem entsprechenden totalen Flächengewicht im Bereich von 70-120 g/m² unterscheidet.

Gemäss einer weiter bevorzugten Ausführungsform kann wenigstens eine, bevorzugt beide Papierlagen im Mittel gleich dick oder bevorzugtermassen dicker ausgebildet werden als die Kunststofflage. So können u.a. haptische Eigenschaften gewährleistet werden, welche ähnlich einem Papiersubstrat, z.B. einem Sicherheitspapier sind.

Eine weitere bevorzugte Ausführungsform ist dadurch gekennzeichnet, dass so genannte Fenster oder zumindest Bereiche, in welchen die Kunststoffschicht frei liegt, vorgesehen sind. Dazu weist wenigstens eine der Papierlagen wenigstens eine bereichsweise durchgehende Aussparung auf. Richtige Fenster können hergestellt werden, indem beide Papierlagen jeweils durchgehende Aussparungen aufweisen, und diese Aussparungen derart registriert zugeführt werden, dass sich wenigstens bereichsweise Sichtfenster ausbilden, wobei die Sichtfenster bevorzugt wenigstens durchscheinend oder insbesondere bevorzugt vollständig transparent sind. Es ist auch zusätzlich oder gleichzeitig möglich, dass beide Papierlagen jeweils durchgehende Aussparungen aufweisen, und diese Aussparungen derart registriert zugeführt werden, dass sich wenigstens bereichsweise Regionen ausbilden, in welchen die Kunststoffschicht nur einseitig frei liegt. Auch hier ist wenigstens in den sichtbaren Bereichen die Kunststoffschicht bevorzugtermassen durchscheinend oder transparent.

Die Verwendung der oben angegebenen Flächengewichte von Papierlagen sowie Kunststoffschicht erlauben beispielsweise somit die Herstellung von stabilen und transparenten Fenstern. Es ist aber auch möglich in solchen Fenstern Sicherheitsmerkmale o.ä. vorzusehen, und es ist nicht notwendigerweise so, dass die Fenster vollständig transparent sein müssen. Es ist zum Beispiel möglich, in der Kunststoffschicht (fluoreszierende) Farbstoffe oder ähnliches vorzusehen. Bevorzugt ist es aber, dass es sich beim thermoplastischen polymeren Material der Kunststoffschicht um ein transparentes Material handelt.

In Bezug auf das Material der Kunststoffschicht haben sich zum Beispiel folgende Materialien als geeignet erwiesen: Polyethylen (PE), Polypropylen (PP), Polyvinylchlorid (PVC), weich-PVC (PVC-P), Polystyrol (PS), Polyester, co-Polyester, Polycarbonat (PC), Polymethylmethacrylat (PMMA), Polyoxymethylen (POM), Polyethylenterephthalat (PET), Polyetheretherketon (PEEK), Polyamid (PA).

Im Falle von bevorzugtem Polyamid eignen sich insbesondere Polyamid 6 (PA6) oder Polyamid 12 (PA12), wobei u.a. amorphe Formen bevorzugt werden. Weiterhin sind von den vorgenannten Polymeren Mischungen (Blends) oder Copolymere möglich. Bevorzugt ist beispielsweise amorphes Co-Polyamid, bevorzugt auf Basis von PA12.

Gemäss einer weiteren bevorzugten Ausführungsform hat das thermoplastische polymere Material der Kunststoffschicht einen Glasübergangspunkt T_{g} und/oder Schmelzpunkt Tₘ oberhalb von 0° C, bevorzugt oberhalb von 40° C. Mit solchen Materialien kann beispielsweise für die Extrusion bei einer Schmelzetemperatur im Bereich von 250-350°, wobei bevorzugt diese Temperatur beim Austritt aus der Schlitzdüse eingestellt wird, gearbeitet werden. Es zeigt sich, dass eine Extrusion bei einer Viskosität im Bereich von 50-1200 Pa s, insbesondere in einem Bereich von 500-1000 Pa s vorteilhaft ist.

Das Verfahren kann bevorzugtermassen mit einer Prozessgeschwindigkeit von mehr als 70 m/min, insbesondere bevorzugt von mehr als 100 m/min erfolgen. Mit anderen Worten sind wesentlich höhere Produktionsgeschwindigkeiten möglich, als dies bei Laminierverfahren erreicht werden kann.

Um die Penetrationszonen ohne jegliche Schädigung der Papierlagen optimal einstellen zu können, erweist es sich als vorteilhaft, wenigstens eine, bevorzugt beide Papierlagen im wesentlichen unmittelbar vor der Zuführung der Kunststoffschicht zu erwärmen. Bevorzugtermassen geschieht dies ausschliesslich auf der der Kunststoffschicht zugewandten Seite der Papierbahnen. Die Erwärmung kann dabei mittels Heissluftgebläsen und/oder Infrarot-Strahlern und/oder in einem Wärmekanal und/oder über einen Heiztisch und/oder über eine oder mehrere beheizte (Kalander-)Walzen bewirkt werden.

Gemäss einer anderen bevorzugten Ausführungsform wird zwischen dem Walzenpaar unmittelbar nach der Einführung der Kunststoffschicht über die Extrusion ein Liniendruck von 0-500 N/cm, idealerweise von 250-450 N/cm angelegt. Dabei wird das Walzenpaar auf einer Temperatur oberhalb der Raumtemperatur gehalten. Die Walzentemperatur sollte aber idealerweise auch nicht oberhalb der Schmelztemperatur respektive oberhalb des Glasübergangspunktes der verwendeten Materialien der Kunststoffschicht liegen. Entsprechend erweist es sich als vorteilhaft, das Walzenpaar auf eine Temperatur im Bereich von 50 - 100° C, bevorzugtermassen im Bereich von 60 - 80°C, zu temperieren. Bevorzugt wird eine Temperatur knapp unterhalb vom Glasübergangspunkt T_{g} und/oder dem Schmelzpunkt Tₘ der verwendeten Materialien der Kunststoffschicht gewählt. Unter Umständen kann es sich als vorteilhaft erweisen, eine Walzentemperatur oberhalb des Glasübergangspunktes der verwendeten Materialien der Kunststoffschicht zu wählen. Insbesondere amorphe Materialien verfügen üblicherweise über einen mit sinkender Temperatur steil abfallenden Verlauf der Schmelzviskosität, so dass für eine ausreichende Penetration Walzentemperaturen über T_{g} erforderlich sein können. So hat sich beispielsweise für ein vollamorphes Co-Polyamid 12 mit T_{g} von 155 °C eine Walzentemperatur von T_{g}-45 bis T_{g}-25 (ca. 110-130 °C) als optimal erwiesen, für ein teilkristallines co-Polyamid 12 mit Tₘ von 178 °C eine Walzentemperatur von Tₘ-105 bis Tₘ-90 (ca. 75-90 °C). Je nach verwendetem Material können die idealen Walzentemperaturen auch anders liegen, was nötigenfalls eine Walzentemperierung mittels Öltemperierung erfordert, wodurch Walzentemperaturen bis 180 °C erreicht werden können.

Das Verfahren wird bevorzugtermassen so eingestellt, dass die Penetrationszonen eine mittlere Dicke im Bereich von 5-30 µm, insbesondere bevorzugt im Bereich von 10-20 µm aufweisen.

Eine besonders glatte und damit in Bezug auf Transparenz optimale Oberfläche insbesondere bei den Fenstern kann erreicht werden, indem als Walzen hochglanzpolierte Stahlwalzen verwendet werden. Die Walzen können optional antihaft-ausgerüstet sein, was die Ablösung der Fenster von der Walze begünstigt. In Frage kommen beispielsweise Oberflächen aus PTFE, Teflonoberflächen, Oberflächen aus Chrom oder Chromstahl mit implantierten Teflonpartikeln (auch bekannt unter dem Markennamen TeFlok), Silikonoberflächen, Oberflächen aus Poly(imid), etc. Weiter kann es sich als sinnvoll erweisen, wenn eine oder beide Walzen eine duktile Oberfläche besitzen. Dadurch lässt sich eine homogenere Druckverteilung über die Gesamtbreite der Bahn erreichen. Dies kann insbesondere dann von Vorteil sein, wenn eine oder beide Papierbahnen durchgehende Aussparungen aufweisen, in deren Bereich auf Grund des fehlenden Materials weniger Druck über die Walzen aufgebracht werden kann. Duktile Walzen mögen diese Druckdifferenz ausgleichen, was eine verbesserte Haftung auch in diesen Bereichen ergibt. Bei solche Walzen handelt es sich beispielsweise um mit PTFE beschichtete oder um mit PTFE ummantelte Gummiwalzen oder um silikonbeschichtete Walzen.

Wie bereits weiter oben erwähnt, können in der Kunststoffschicht Sicherheitsmerkmale oder Kombinationen von Sicherheitsmerkmalen eingebaut werden. Möglich sind dabei beispielsweise: Melierfasern, Planchetten, Metallfasern, Markierungsstoffe, IR- oder UV-Farbstoffe, Sicherheitspigmente, Fluoreszenzfarbstoffe, Effektpigmente, oder Sicherheitsfäden, wobei diese Sicherheitsmerkmale als Additive der Polymermischung oder der Schmelze beigegeben oder in der Nähe des Walzenspaltes eingestreut oder auf die Schmelzfahne aufgeblasen, respektive im Falle des Sicherheitsfadens in den Walzenspalt geführt werden.

Gleichermassen ist es bevorzugtermassen möglich, in den Papierlagen Sicherheitsmerkmale vorzusehen. Dabei können solche Sicherheitsmerkmale nur in einer Papierlage angeordnet sein, oder beispielsweise in den beiden Papierlagen unterschiedliche Sicherheitsmerkmale verwendet werden. So können die bereits aus dem Bereich der Papiere als Substrate für Banknoten bekannten Sicherheitsmerkmale ohne weitere Modifikation verwendet werden. Als Sicherheitsmerkmale für die Papierlagen können beispielsweise verwendet werden: Wasserzeichen, insbesondere Graustufen-Wasserzeichen, Sicherheitsfaden, OVD, Melierfasern, Sicherheitspigmente, irisierende Farbapplikationen, Chip, insbesondere RFID-Chip, Magnetstreifen.

Insbesondere wenn Fenster hergestellt werden sollen, und diese eine möglichst homogene Oberfläche haben sollen, kann gemäss einer weiteren Ausführungsform der Eintrag der schmelzflüssigen Polymerlage über eine Schlitzdüse, welche in unmittelbaren Kontakt zur Papierlagen steht, erfolgen. Alternativ oder zusätzlich ist es möglich, den Eintrag der schmelzflüssigen Polymerlage über eine Gravurwalze, eine Siebdruckwalze oder eine Auftragswalze, insbesondere unter Verwendung eines Dreiwalzenwerkes, zu gewährleisten.

Es wird bevorzugt, die Kunststoffschicht ganzflächig über im wesentlichen die gesamte Fläche der beiden Papierlagen auszubilden. Es ist aber auch möglich, nur bereichsweise respektive streifenweise eine Kunststoffschicht anzuordnen und/oder die Kunststoffschicht bereichsweise respektive streifenweise unterschiedlich dick auszugestalten.

Die Extrusion kann auf Basis einer einfachen Schmelze erfolgen, alternativ ist es aber auch möglich, als Material der Kunststoffschicht ein Präpolymer, welches während oder im Anschluss an die Verbindung mit den Papierlagen chemisch oder physikalisch aushärtet oder/und ausreagiert oder/und geliert, zu verwenden.

Weiterhin betrifft die vorliegende Erfindung ein Mehrschichtsubstrat, wie es in einem oben beschriebenen Verfahren hergestellt werden kann, respektive wie es tatsächlich durch ein Verfahren wie oben beschrieben hergestellt wird.

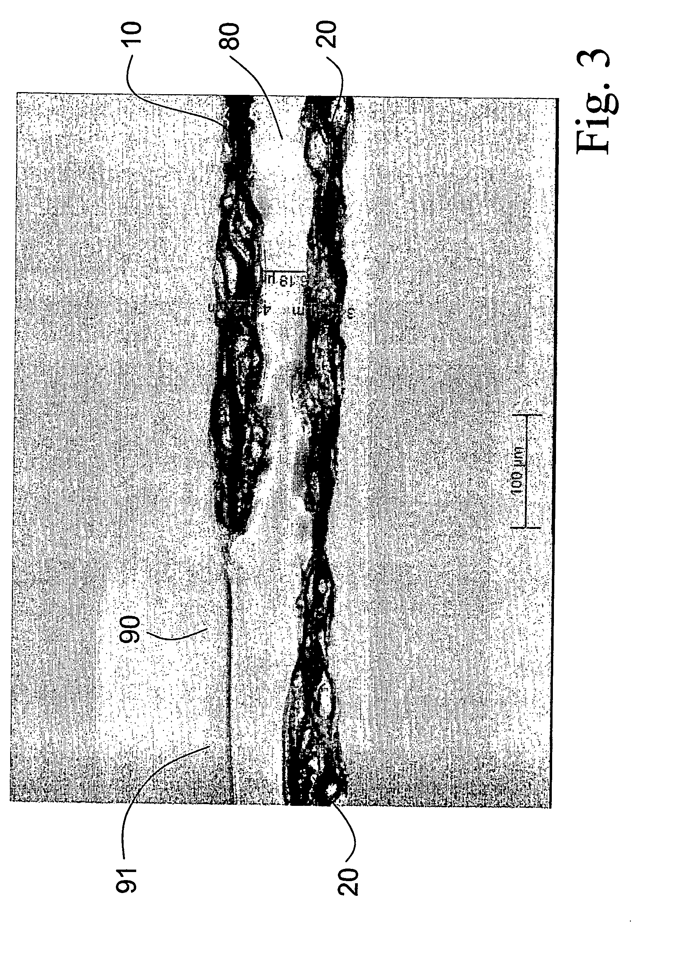

Ein solches Mehrschichtsubstrat ist bevorzugtermassen dadurch gekennzeichnet, dass wenigstens eine der Papierlagen wenigstens eine bereichsweise durchgehende Aussparung aufweist, wobei diese bevorzugtermassen beide Papierlagen jeweils durchgehende Aussparungen aufweisen, und diese Aussparungen derart registriert zugeführt werden, dass sich wenigstens bereichsweise Sichtfenster ausbilden, und dass im Kantenbereich der Aussparungen Abplattungen vorhanden sind, d.h., dass Übergänge von Papier zu Polymer eine geringere Kantenhöhe als die Papierdicke aufweisen (vgl. auch Fig. 3).

In einer bevorzugten Variante dieser Ausführungsform unterscheiden sich die zusammengeführten Aussparungen der beiden Papierlagen in Form und/oder Grösse voneinander, so dass sich ein Sichtfenster ergibt, welches durch einen Randbereich charakterisiert ist, der nur einseitig von einer Papierlage überdeckt ist. Eine solche Ausführungsform aus Gründen der Fälschungssicherheit bevorzugt, da sie den Mehrschichtaufbau sichtbar macht, was sich durch Verwendung einer einzelnen Papierlage nicht nachstellen lässt.

Eine besonders bevorzugte Ausführungsform ist dadurch gekennzeichnet, dass beide Papierlagen jeweils durchgehende Aussparungen aufweisen, und diese Aussparungen derart registriert zugeführt werden, dass sich wenigstens bereichsweise Sichtfenster und/oder Regionen ausbilden, in welchen die Kunststoffschicht nur einseitig frei liegt, wobei die Kunststoffschicht wenigstens ein Sicherheitsmerkmal in Form eines Sicherheitsfadens aufweist, wobei der Sicherheitsfaden in den Walzenspalt geführt wird, und wobei der Sicherheitsfaden in den Sichtfenstern und/oder Regionen im endgültigen Mehrschichtsubstrat in Aufsicht sichtbar ist. Insbesondere bevorzugt werden die Regionen, in welchen die Kunststoffschicht nur einseitig frei liegt, derart registriert bevorzugt in Verlaufsrichtung des Sicherheitsfadens alternierend auf Ober- und Unterseite des Mehrschichtsubstrates angeordnet, dass der Sicherheitsfaden als Window-Faden von beiden Seiten in Aufsicht sichtbar ist. Ein solches Mehrschichtsubstrat weist eine wesentlich erhöhte Fälschungssicherheit auf, insbesondere in Kombination mit spezifischen Sicherheitsfäden, welche beispielsweise fluoreszierende und/oder polarisierende und/oder leitfähige Merkmale aufweisen.

Wie bereits weiter oben erwähnt, handelt es sich beim thermoplastischen polymeren Material der Kunststoffschicht insbesondere um ein transparentes Material, und in Bereichen von Sichtsfenstem sind diese hochtransparent und verfügen über eine glatte Oberfläche. Beim Material der Kunststoffschicht handelt es sich um ein, bevorzugt amorphes, Polyamid, bevorzugt mit einem Glasübergangspunkt oberhalb von 20 °C, insbesondere bevorzugt ist ein Polyamid 12 und/oder ein amorphes Copolyamid 12. Die Papierschichten haben ein Flächengewicht im Bereich von 5-500 g/m², bevorzugt im Bereich von 10 - 80 g/m², insbesondere bevorzugt im Bereich von 20-40 g/m². Gemäss einer bevorzugten Ausführungsform handelt es sich bei zumindest einer Papierlage um ein Sicherheitspapier. Gemäss einer weiteren, bevorzugten Ausführungsform weist zumindest eine Papierlage ein Wasserzeichen auf. Die Papiere können beispielsweise auf einer Rundsieb-Papiermaschine oder auf einer Langsieb-Papiermaschine gefertigt worden sein.

Das Mehrschichtsubstrat hat gemäss einer bevorzugten Ausführungsform eine Doppelfalzzahl, welche wesentlich höher ist als jene von normalen Papierträgern, das heisst es hat eine Doppelfalzzahl von mehr als 1800 insbesondere von mehr als 5000.

Weiterhin betrifft die vorliegende Erfindung die Verwendung eines solchen Mehrschichtsubstrates als Abdeckmaterial, Verpackungsmaterial, Kartenmaterial, Sicherheitspapier, insbesondere als Banknote, Scheck, Ticket, Zertifikat, Aktiendokument, Obligationendokument, Urkunde, Ausweisdokument, Zutrittsdokument.

Weitere bevorzugte Ausführungsformen des Verfahrens, des Mehrschichtsubstrates sowie dessen Verwendung sind in den abhängigen Ansprüchen beschrieben.

### KURZE ERLÄUTERUNG DER FIGUREN

Die Erfindung soll nachfolgend anhand von Ausführungsbeispielen im Zusammenhang mit den Zeichnungen näher erläutert werden. Es zeigen:
- Fig. 1: einen schematischen Prozess zur Herstellung eines erfindungsgemässen Mehrschichtverbundes durch Schmelzeeintrag mittels Extrusion; und
- Fig. 2: einen Querschnitt durch ein derart hergestelltes Mehrschichtsubstrat.
- Fig. 3: eine Mikroskopaufnahme eines Querschnittes durch einen erfindungsgemässen Mehrschichtverbund mit halbtransparentem (einseitig von Papier überdecktem) Fenster.
- Fig. 4: ein Schema einer Komplettanlage zur Herstellung eines erfindungsgemässen Mehrschichtverbundes.

### WEGE ZUR AUSFÜHRUNG DER ERFINDUNG

Gegenstand der vorliegenden Erfindung ist es, die genannten Nachteile bei der Produktion eines Mehrschichtlaminates und die sich daraus ergebenden, genannten Nachteile der Produkteigenschaften unter Verwendung von Kunststofffolien zu lösen, indem auf einen wie z.B. in der WO2004/076198 vorgeschlagenen Laminierprozess verzichtet wird und stattdessen ein mehrschichtiges Substrat 60 basierend auf einer ersten Papierlage 10 und einer zweiten Papierlage 20 und Polymer 80 in der Art hergestellt wird, dass das Polymer bereits in schmelzflüssiger Form als Polymerschmelze 30 eingetragen wird.

Die vorliegende Erfindung betrifft demzufolge einen Prozess, bei dem Technologien aus der Flachfolienextrusion auf eine Beschichtungsanwendung übertragen werden, wodurch sich erstmals ein mehrschichtiger Verbund herstellen lässt, der aus Papierlagen (wenigstens eine davon aus Sicherheitspapier) besteht, die z.B. über durchgehende Durchbrechungen verfügen, welche ohne Verwendung einer vorgefertigten Folie mit einer folienartigen Polymerlage vollständig überspannt werden.

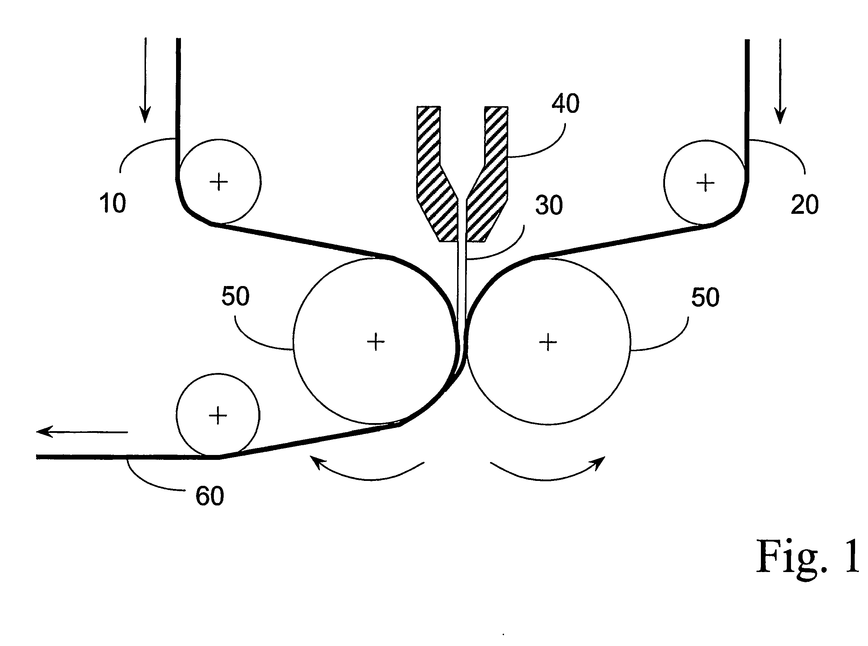

Auf diese Art entfällt die gegenüber der im Stand der Technik bekannten Laminiervariante kostenintensive Vorformung einer Flachfolie ebenso wie das umständliche, zeitintensive und für das Papier schädliche Aufschmelzen der Folie im direkten Kontakt mit den Papierbahnen. Stattdessen wird, wie in Figur 1 dargestellt, Polymergranulat in einem Extruder aufgeschmolzen und gefördert und durch eine Breitschlitzdüse 40 direkt in der schmelzflüssigen Phase als Polymerschmelze 30 auf respektive zwischen die zum Beispiel ab Rolle zugeführten Papierlagen aufextrudiert. Der Begriff der schmelzflüssigen Phase bedeutet in dem Zusammenhang eine Zustandsform des Polymeren, die durch eine erhöhte Verformbarkeit respektive eine verminderte Viskosität charakterisiert ist. Die Viskosität liegt dabei in einem für die Polymerverarbeitung, insbesondere für die Flachfolienherstellung geeigneten Bereich zwischen 20 und 2000 Pa s, bevorzugt im Bereich von 50 bis 1000 Pa s, insbesondere zwischen 75 und 500 Pa s. Dabei ist es unwesentlich, ob es sich bei der Polymerschmelze um ein Polymer mit definiertem Schmelzpunkt Tₘ oder definiertem Schmelzintervall Tₘ±ΔT bei einer Temperatur oberhalb der Schmelztemperatur Tₘ handelt, oder aber ob es sich um ein Polymer ohne definierten Schmelzpunkt handelt, das so weit über den Glasübergangspunkt T_{g} erwärmt vorliegt, dass die Viskosität des Materials soweit herabgesetzt wird, dass eine Verarbeitung in der vorgeschlagenen Art und Weise möglich ist. Polymere, die in die erste Klasse fallen, sind beispielsweise teilkristalline Polymere wie Polyethylen (PE), Polypropylen (PP), Polyethylenterephthalat (PET), Polyamid 6 (PA6), Polyamid 12 (PA12), teilkristalline co-Polyamide und teilkristalline co-Polyester. Polymere, die in die zweite Klasse fallen, sind beispielsweise amorphe Polymere wie Polyvinylchlorid (PVC), Polystyrol (PS), Polycarbonat (PC), Polymethylmethacrylat (PMMA), aber auch amorphe co-Polyamide (z.B. auf Basis von PA12) und amorphe co-Polyester, wie sie beispielsweise von Ems (EMS Chemie, Domat-Ems, Schweiz) hergestellt werden.

Einige Beispiele für Polymere mit und ohne definierte Schmelzpunkte, die sich für die Anwendung besonders eignen, sind in der nachfolgenden Tabelle 1 gegeben.

**Tabelle 1**

| **Polymer** | **T_{g}** | **Tₘ** |
|---|---|---|
| Polyethylen (PE) | -110 bis -90 °C | 135 °C |
| Polypropylen (PP) | -10 °C | 175 °C |
| Polyvinylchlorid (PVC) | 50 bis 90 °C | - |
| Polystyrol (PS) | 100 °C | - |
| Polycarbonat (PC) | 150 °C | - |
| Polymethylmethacrylat (PMMA) | 105 °C | - |
| Polyoxymethylen (POM) | 125 °C | 175 °C |
| Polyethylenterephthalat (PET) | 70 °C | 265 °C |
| Polyetheretherketon (PEEK) | 145 °C | 335 °C |
| Polyamid 6 (PA6) | 50 °C | 215 °C |
| Polyamid 12 (PA12) | 45 °C | 178 °C |
| teilkristiallines Co-Polyamid L25, Ems | 45 °C | 178 °C |
| teilkristiallines Co-Polyamid L16, Ems | 50 °C | 178 °C |
| amorphes Co-Polyamid G21, Ems | 125 °C | - |
| amorphes Co-Polyamid TR90, Ems | 155 °C | - |

Bevorzugte Materialien zur Ausführung der genannten Anwendung sind insbesondere Polymere aus der Klasse der Polyamide. Diese besitzen auf Grund ihrer chemischen Struktur eine besonders hohe Affinität zu Papier. Grund für diese Tatsache ist die Ausbildung von Wasserstoffbrücken zwischen den Amidgruppen des Polyamids und den polaren Gruppen der Cellulosefasern des Papiers. Ein Mehrschichtsubstrat aus diesen bevorzugten Materialien mit Papier zeichnet sich daher durch einen besonders innigen Verbund aus, der von einem guten Stoffschluss einerseits und von einer guten Kompatibilität der einzelnen Komponenten andererseits herrührt. Der innige Stoffschluss kann ggf. eine Folge von guter Benetzbarkeit der Papierfasern mit der verwendeten Polymerschmelze sein. Eine weitere Polymerklasse, die sich durch gute Benetzbarkeit auszeichnet, und ebenfalls Verbunde mit innigem Stoffschluss ergeben, sind die Polyester. Ggf. lässt sich ein ausreichender Stoffschluss auch mit Polymeren erzielen, die nicht über die genannte Möglichkeit der Wasserstoffbrückenbildung verfügen, beispielsweise mit Polyolefinen wie Polyethylen oder Polypropylen.

Weitere vorteilhafte Eigenschaften eines polymeren Materials für ein erfindungsgemässes Substrat sind hohe chemische Beständigkeit gegenüber Säuren, Basen, Lösungsmitteln, Bleichmitteln etc., hohe thermische Beständigkeit, hohe UV-Beständigkeit, hohe Transparenz, hohe Biegewechselfestigkeit, hohe Erweichungstemperatur. In dieser Hinsicht sind Polyamide besonders gut geeignet, so beispielsweise Polyamid PA12 oder Copolyamide auf dieser Basis.

Da das Polymer im Sinne der Erfindung direkt in schmelzflüssiger Form auf das Papier trifft, fällt die Wärmebeeinflussung des Papiers kurzzeitig und somit kaum schädlich aus. Es ist möglich, mit vergleichsweise hohen Schmelzetemperaturen im Bereich von 300-350 °C zu fahren, welche im Falle eines Laminierprozesses nicht oder nur mit in der Regel irreversibler Schädigung des Papiers anwendbar wäre. Dies hat den Vorteil, dass durch die hohe Temperatur der Schmelze eine niedrigere Schmelzviskosität erzielt werden kann, was ein leichteres und schnelleres Eindringen in das Papier und einen für ein Sicherheitssubstrat geforderten, innigeren Verbund ermöglicht. Gleichzeitig werden schnellere Prozessgeschwindigkeiten erlaubt. Extrusionsbeschichtungsanlagen können demzufolge auch problemlos mit Prozessgeschwindigkeiten von bis zu 500 m/min betrieben werden, während Bandpressen für die Lamination bei Verwendung von Kunststofffolien üblicherweise nicht bei mehr als ca. 50 m/min betrieben werden. Im Fall der Anwendung einer Bandpresse oder eines Rollenlaminators zum Herstellen eines Mehrschichtsubstrates mit einer Polymerfolie ist die Arbeitstemperatur auf ca. 200 °C beschränkt, da sonst das Papier irreversibel geschädigt wird. Bei diesen Temperaturen ist mit den bevorzugten Materialien keine ausreichende Verbindung zu erreichen, wie sie für ein solches Produkt gefordert wird. Bei der Anwendung einer Extrusionsbeschichtungsanlage wird die geforderte Verbindung derselben Materialien aber ermöglicht, da die heisse, fliessfähige Schmelze in die Papieroberfläche ausreichend tief eindringen kann, ohne dass diese auf eine für das Papier schädliche Temperatur gebracht werden muss.

Die Schmelzviskosität ist bei einer gegebenen Temperatur in indirekter Weise auch von der Schergeschwindigkeit abhängig, was eine weitere Möglichkeit zur Einstellung der Verarbeitungsparameter bietet und was die Prozessführung insbesondere bei erhöhten Produktionsgeschwindigkeiten erleichtert.

Ein weiterer Vorteil des vorgeschlagenen Verfahrens ist, dass sich in einem derart hergestellten Verbund wesentlich geringere Schichtdicken von Polymer erzielen lassen, als dies durch Lamination mit einer Polymerfolie möglich wäre. Dadurch, dass im erfindungsgemässen Verfahren das Polymer in schmelzflüssiger Form direkt von mindestens einem stützenden Papier übernommen wird, lassen sich wesentlich dünnere aber immer noch tragende und stützende Schichten erzielen. Dies gilt insbesondere für einen mehrschichtigen Polymereintrag, der sich unter Verwendung mehrerer Extruder und einem entsprechenden Mehrschichtwerkzeug aus ein und derselben Breitschlitzdüse auftragen lässt. Entsprechende Apparaturen können aus der Extrusionstechnik, insbesondere aus dem Bereich der Flachfolienextrusion, übernommen werden.

Ein weiterer Vorteil des erfindungsgemässen Extrusionsprozesses liegt in der Flexibilität in Bezug auf die Variation des zu verarbeiteten Polymers. Materialwechsel sind innert kürzester Zeit möglich, was auch die Produktion kleinerer Losgrössen attraktiv macht. Ausserdem lassen sich dem Polymergranulat in einfacher Weise vor der Extrusion Markierungsstoffe, Farbstoffe, Sicherheitspigmente, Fluoreszenzfarbstoffe, Effektpigmente, Interferenzpigmente, Metallpigmente, Reaktivfarbstoffe, UV-Absorber, Stabilisatoren und weitere Additive, bevorzugterweise in Form eines Masterbatches, zudosieren, was eine einfache Individualisierung und eine weitere Absicherung des Produktes ermöglicht.

Eine zentrale Schwierigkeit in der Herstellung des gewünschten Produktes liegt in der Ausbildung transparenter, ebenmässiger Fenster. Normalerweise weisen Substrate, die auf Extrusionsbeschichtungsanlagen mit Polymer kaschiert werden, keine durchgehenden Durchbrechungen auf. Die aus dem Stand der Technik genannten Dokumente verwenden demzufolge auch keine Papierbahnen, die Durchbrechungen aufweisen, in welchen sich im Extrusionsbeschichtungsprozess mit Polymer überspannte Sichtfenster ausbilden würden. Extrusionsbeschichtungsanlagen zur Herstellung von Papierverbunden sind üblicherweise so aufgebaut, dass das Papier auf einer aufgerauten, temperierten oder gekühlten Stahlwalze geführt wird, eine zweite Papierbahn über eine mit Gummi ummantelte Presseurwalze geführt gegen die erste Stahlwalze gepresst wird, und die Polymerschmelze in den entstehenden Walzenspalt extrudiert wird. Dies ist insbesondere auch im weiter oben genannten Dokument US20020176973A1 der Fall, wo explizit Walzenmaterialien aus Gummi oder andere Materialien mit einer Duktilität von Gummi verwendet werden. Eine solche Konfiguration lässt erfahrungsgemäss keine Ausbildung transparenter, ebenmässiger Fenster im Bereich von Aussparungen in den Papierbahnen zu. Die aufgeraute Oberfläche der temperierten Stahlwalze überträgt sich in das schmelzflüssige Polymer, welches auf der Gegenseite stark an der Presseurwalze aus Gummi haftet. Eine Abkühlung des temperierten Walzenpaars weit unter die Erstarrungstemperatur des Polymers mag das Haften auf der Gummiwalze etwas reduzieren, eine gewisse Ausbauchung der Fenster lässt sich aber dennoch nicht vermeiden, ebenso wenig ist eine für ausreichende Transparenz notwendige, glatte Oberfläche zu erzielen.

Gegenstand der Erfindung ist es nun u.a., einen Aufbau zu wählen, bei dem als Walzenpaar 50 zwei hochglanzpolierte, temperierbare Stahlwalzen gewählt werden. Eine solche Konfiguration ist für dünne, wenig voluminöse Verbunde wie im vorliegenden Fall unbekannt. Extrusionsbeschichtungsanlagen, welche mit zwei Stahlwalzen (anstelle einer Stahlwalze und einer Gummiwalze) arbeiten, werden allenfalls zur Verarbeitung voluminöser, dicker Materialien wie beispielsweise Spinnfliesen angewandt. Die zur Produktion eines dünnen, Papier-basierten Verbundes unübliche Wahl zweier hochglanzpolierter Stahlwalzen ermöglicht nun die Ausbildung spiegelglatter, ebenmässiger, hochtransparenter Sichtfenster in der Qualität einer extrudierten Flachfolie.

Die Abkühlung der Schmelze erfolgt im Kontakt mit den Walzen ausreichend rasch, um eine mögliche Kristallisation des Polymers weitgehend zur verhindern. Die Walzentemperatur ist im Gegensatz zu der Walzentemperatur in einem Laminator tiefer als die Erweichungstemperatur des Polymers gewählt, was das Kleben des Polymers auf der Walze weitgehend unterbindet. Dennoch kommt an der Grenzfläche von Polymer und Papier ein ausreichend inniger Verbund durch Ausbildung einer Penetrationszone zu Stande, in der das Polymer den Faserverbund des Papiers zumindest teilweise umschliesst. Als Ursache dafür wird eine gewisse Isolationswirkung des Papiers vermutet, welches über eine tiefe Wärmeleitfähigkeit verfügt. Im Kontakt mit der Papierbahn kühlt die Polymerschmelze daher vergleichsweise langsam ab, so dass sie bis zur Erstarrung ausreichend tief in die Papieroberfläche einzudringen vermag. Als vorteilhaft erweist sich dabei, dass die eindringende Schmelze mit zunehmender Eindringtiefe näher an die kühlere Walzenoberfläche gelangt und somit die Wärmeabfuhr rascher erfolgt und die Schmelze demzufolge umso rascher erstarrt, je tiefer sie in das Papier eindringt. Dieser selbstregulierende Mechanismus kann dazu genutzt werden, die Eindringtiefe des Polymers exakt einzustellen und eine komplette Durchdringung des Polymers bis an die Papieroberfläche zu verhindern. Im Gegensatz dazu sind im Laminierprozess in einer Heisspresse oder einem Rollenlaminator die höchsten Temperaturen auf der Laminat-Aussenseite anzutreffen, so dass die Polymerfolie umso fliessfähiger wird, je tiefer sie in die Papierlage eindringt. Andererseits sind die tiefsten Temperaturen im Kern des Laminates anzutreffen, wo die Verbindung von Polymer und Papier zustande kommen sollte. Ein so hergestelltes Produkt neigt somit einerseits dazu, an der Oberfläche komplett von Polymer durchdrungene Stellen aufzuweisen, andererseits eine schlechte Verbundhaftung aufzuweisen. Erschwerend wirken sich diese Nachteile der im Stand der Technik beschriebenen Laminiervariante auf ein Produkt aus, welches über Sichtfenster verfügt. Die Polymerfolie in den freiliegenden Zonen erfährt im Laminierprozess die höchsten Temperaturen, da sie direkt auf die beheizten Apparateteile zu liegen kommt, und wird demzufolge fliessfähiger als die im Inneren des Papierverbundes liegende Polymerfolie. Dies führt einerseits dazu, dass sich auf den Fenstern die Oberflächenstruktur der Apparateteile abformen und andererseits die Ablösung dieser fliessfähigen, klebrigen Fenster von den Apparateteilen kaum ohne Deformation möglich ist.

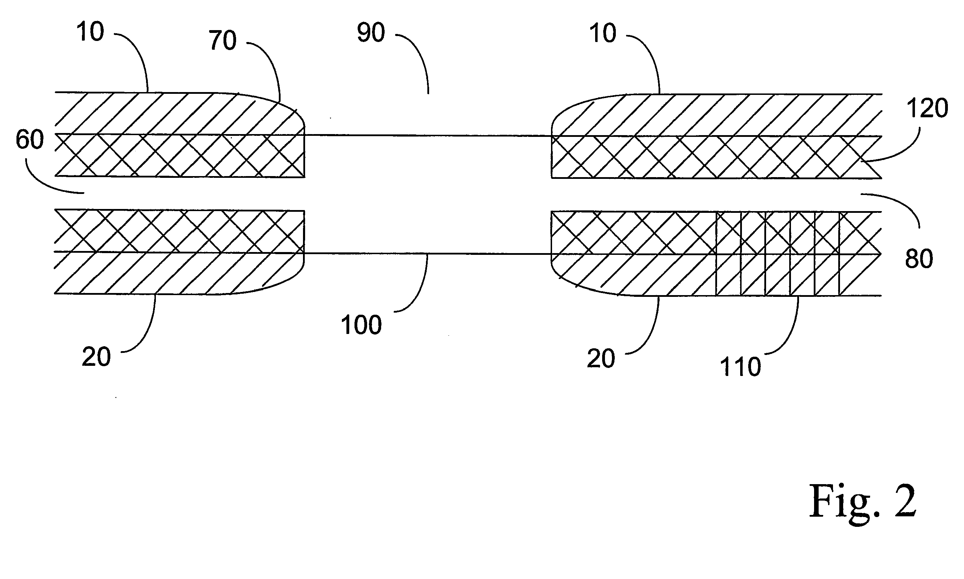

Die vorliegende Erfindung basiert demzufolge u.a. auf der überraschenden Erkenntnis, dass eine Polymerschmelze aus einer Schlitzdüse direkt in den Spalt zwischen zwei temperierten Rollen extrudiert werden kann, auf denen jeweils z.B. eine mit durchgängigen Aussparungen 90 (vgl. Figur 2) versehene Papierbahn läuft, und sich dadurch ein Mehrschichtverbund erzielen lässt, der sowohl über hochtransparente Sichtfenster 100 wie über eine exzellente Verbindung der einzelnen Lagen untereinander durch die Ausbildung einer Penetrationszone 120 verfügt.

Als Walzenpaar 50 werden dabei bevorzugterweise zwei hochglanzpolierte Stahlwalzen gewählt, und die Temperatur des Walzenpaares wird bevorzugterweise so eingestellt, dass die Polymerschmelze in den Bereichen, wo diese in direktem Kontakt zu den Walzen steht, ausreichend rasch auf eine ausreichend tiefe Temperatur abgekühlt wird, so dass ein Kleben auf der Walzenoberfläche weitgehend verhindert wird, andererseits in Bereichen, wo die Polymerschmelze in Kontakt mit den Papierlagen steht, die Polymerschmelze eine ausreichend geringe Viskosität beibehält, um in ausreichendem Masse unter Bildung einer Penetrationszone 120 in die Papierlagen einzudringen, um einen innigen Verbund zu ermöglichen.

Vermutlicherweise kommt einem solchen Prozess die Tatsache zu Gute, dass die Schmelze bei direktem Kontakt zur temperierten Walzenoberfläche rascher erstarrt als wenn diese durch eine Papierlage von der Walzenoberfläche getrennt ist, was eine langsamere Abkühlung durch eine gewisse Isolationswirkung der Papierlage zur Folge hat. Bevorzugterweise wird eine Walzentemperatur knapp unter der Erweichungstemperatur des zur Walze in Kontakt stehenden Polymers gewählt, so dass das Polymer in direktem Kontakt mit der Walze sofort zu einer ausreichend festen Folie erstarrt, in Bereichen, in denen das Polymer durch die Papierlage von der Walze getrennt liegt, die Polymertemperatur aber noch eine gewisse Zeit über der Erweichungstemperatur liegt, um ein ausreichendes Eindringen in die Papierlage zu ermöglichen. Es kann sich in diesem Zusammenhang als vorteilhaft erweisen, das Papier vor dem Zuführen der Polymerschmelze vorzuwärmen. Dies kann beispielsweise mittels Infrarot-Strahlern erfolgen, aber auch mittels Heissluftgebläsen. Alternativ kann die Papierbahn zum Aufwärmen durch einen Wärmekanal oder über einen Heiztisch gezogen werden oder um eine oder mehrere beheizte Walzen, insbesondere bezeizte Kalanderwalzen, geschlungen werden. Vorteilhafterweise wird die im Verbund innenliegende Papieroberoberfläche stärker erwärmt respektive auf eine höhere Temperatur gebracht, als die der Polymerschicht abgewandte Seite. Dies geschieht beispielsweise automatisch bei der Verwendung eines Infrarot-Heizstrahlers, der auf die im Verbund innenliegende Papieroberfläche gerichtet wird.

Zusätzlich oder alternativ kann das Eindringen der Polymerschmelze in die Papieroberfläche und/oder die Polymerhaftung begünstigt werden, indem das Papier vorbehandelt wird. Haftvermittler, die die Benetzbarkeit des Papiers mit der Polymerschmelze verbessern, können sich als vorteilhaft erweisen, ebenfalls Primer, welche zusätzlich mit einer oder beiden Komponenten reagieren. Mögliche Additive, die in der Papiermasse beigegeben oder über die Leimflotte in beispielsweise einer Leimpresse aufgebracht werden können oder im Streichverfahren aufgebracht werden können sind beispielsweise Dispersionen und/oder Emulsionen von Polymeren, insbesondere von amphiphilen Polymeren. Auch andere Vorbehandlungsmittel, sogenannte Primer, sind dem Fachmann bekannt. Solche Additive werden beispielsweise von Trüb Emulsions Chemie AG, Ramsen, Schweiz, explizit für die Extrusionsbeschichtung von Papier angeboten. Weiter können die Papiere zur Verbesserung der Haftung mit Coronabehandlung, Ozonbehandlung, Flammbehandlung und weiteren, dem Fachmann bekannten Methoden oberflächenaktiviert werden.

Das Eindringen des Polymers in die Papierlagen wird zusätzlich dadurch vereinfacht, dass der Schmelzefilm im Kontakt mit der Papierlage im Vergleich zum direkten Kontakt mit der Walze unter erhöhtem Druck steht. Aus diesen beiden Gründen wird ein ausreichend tiefes Eindringen der Schmelze in die Papierlage, und damit die Ausbildung einer für einen innigen Verbund notwendige Penetrationszone 120, auch bei hoben Prozessgeschwindigkeiten ermöglicht. Ein weiterer positiver Effekt des erhöhten Druckes im Übergangsbereich der durchgehender Durchbrechung 90 ist, dass sich eine gewisse Abplattung 70 des Randes um die Durchbrechung 90 ausbildet, was zu einem weichen Übergang zwischen Papierlage 10 und Sichtfenster 100 führt. Im Gegensatz zu einem scharfkantigen Übergang, wie er beispielsweise beim Laminieren von einer Papierlage mit durchgehenden Durchbrechungen mit einer Folie unter Zuhilfenahme eines Adhäsivs entstehen würde, ist im vorliegenden Fall die Gefahr der unabsichtlichen oder auch willentlichen Zerstörung des Verbundes durch Angriff dieser Kante dramatisch vermindert.

Bei Verwendung zweier, mit durchgehenden Durchbrechungen versehener Papierlagen liegen die Durchbrechungen bevorzugterweise zumindest bereichsweise übereinander (registrierte Zuführung), um mindestens bereichsweise vollständig transparente Sichtfenster zu erhalten. Die durchgehenden Durchbrechungen brauchen aber nicht notwendigerweise identisch und/oder deckungsgleich zu sein. In einer bevorzugten Ausführungsform enthält mindestens eine der Papierlagen ein Wasserzeichen 110.

Ein Querschnitt durch ein erfindungsgemässes Substrat in eine Mikroskopaufnahme in einem Schnitt senkrecht zur Papierebene ist in Fig. 3 gezeigt. Dabei ist nur eine der Papierlagen 10 mit einer Aussparung 90 versehen, so dass sich eine Region 91 ausbildet, in welcher die Polymerlage nur einseitig frei liegt.

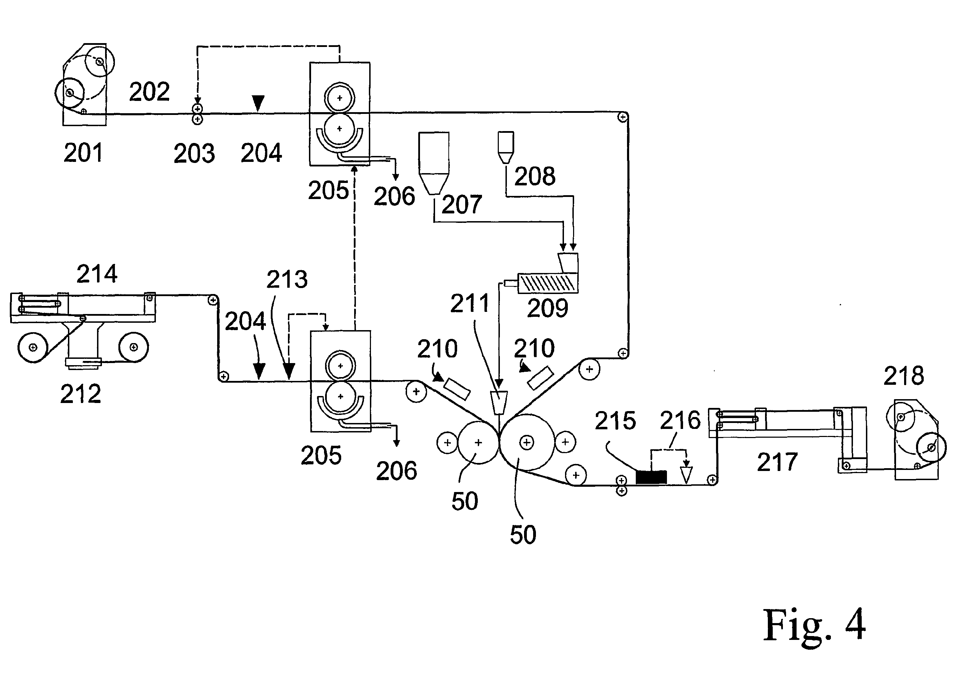

Eine Anlage, die ein erfindungsgemässes Mehrschichtsubstrat herstellt, welches aus einer ersten Lage Wasserzeichenpapier 214 mit durchgehenden Aussparungen in Abpassung mit den Wasserzeichen besteht, sowie aus einer Lage Papier 202 mit Aussparungen in Abpassung zu den Aussparungen der ersten Lage besteht, sowie aus einer innenliegenden Polymerschicht besteht, die in schmelzflüssiger Form zwischen die beiden, deckungsgleich zusammengebrachten, mit durchgehenden Aussparungen versehenen Papierlagen hinein extrudiert wird, ist schematisch in Fig. 4 gezeigt. Ausgezogene Pfeile bezeichnen dabei Materialtransport, gestrichelte Pfeile bezeichnen Datenfluss.

Die Papierbahn 202 aus konventionellem Papier wird dabei von einem Abwickler 201 zugeführt, und zunächst durch eine Zugregelung 203 und eine Bahnkantensteuerung 204 geführt. Anschliessend werden die Aussparungen in einem Stanzwerk 205 erzeugt und die Stanzlinge in einer Absaugung 206 entfernt.

Die Papierbahn 214 aus Wasserzeichenpapier wird ihrerseits über einen Abwickler 212 zugeführt, und über eine Bahnkantensteuerung 204 in das Verfahren eingeführt. Dahinter befindet sich ein Wassermarkenleser 213 sowie wiederum ein Stanzwerk 205 zur Erzeugung der Aussparungen ihn zu den Wassermarken registrierter Weise.

Parallel dazu wird die Kunststoffschicht respektive das dazu verwendete Material aufbereitet, indem Material aus einem Trockner 207 zugeführt und gegebenenfalls mit einem weiteren Material, beispielsweise einem Masterbatch aus einer Dosiereinrichtung 208 vermengt wird und über einen Extruder 209 zu einer Schlitzdüse 211 geführt wird.

Die beiden Papierbahnen 202/214 werden zunächst auf der der Kunststoffschicht zugewandten Seite mit jeweils einem Infrarot-Heizstrahler 210 erwärmt und dann in den Spalt zwischen den beiden Walzen 50 unter gleichzeitiger Zuführung des Kunststoffes aus der Schlitzdüse 211 gerollt. Dass so erzeugte Mehrschichtlaminat wird anschliessend in einer Bahninspektion-Endkontrolle 215 kontrolliert und mit einer gegebenenfalls vorhandenen Ink-Jet-Markierung 216 markiert, und über einen Bahnspeicher /Schneidtisch 217 geführt und am Ende auf der Vorrichtung 218 aufgerollt.

In einer bevorzugten Form wird als schmelzflüssiges Polymer ein mehrschichtiger Schmelzevorhang aus verschiedenen Polymeren zugeführt. Bevorzugterweise ist der Aufbau eines solchen mehrschichtigen Schmelzevorhangs symmetrisch, beispielsweise mit einer innenliegenden Schicht eines ersten Polymers und je einer aussenliegenden Schicht eines zweiten Polymers. Bevorzugterweise liegt die Erweichungstemperatur des aussenliegenden Polymers unter jener des innenliegenden Polymers, respektive verfügt das aussenliegende Polymer bei den gegebenen Verarbeitungsbedingungen über eine niedrigere Schmelzviskosität als das innenliegende Polymer. Auf diese Art kann durch geeignete Wahl des aussenliegenden Polymers die Verbindung zu den Papierlagen oder die chemische Resistenz optimiert werden, während als innere Polymerlage ein Material für eine optimierte Ausbildung der Fenster gewählt werden kann. Bevorzugterweise handelt es sich bei einer derartigen mehrschichtigen Polymerlage um weitgehend kompatible Polymere wie beispielsweise verschiedene Arten von Polyamiden oder verschiedene Arten von Polyestern. Es sind aber auch mehrlagige Polymerlagen aus unterschiedlichen, nicht notwendigerweise kompatiblen Polymerklassen machbar, wie beispielsweise eine Polymerlage mit innenliegendem Kern aus einem Polyamid und aussenliegenden Lagen von Polyolefinen, beispielsweise Polyethylen oder Polypropylen.

Es kann sich generell als vorteilhaft erweisen, den mehrschichtigen Verbund nach Eintrag des Polymers noch über eine gewisse Strecke möglichst tangential zum Walzenspalt weiterzuführen, oder zumindest vor der vollständigen Abkühlung von den gebogenen Walzenoberflächen wegzuführen und über eine gewisse Strecke gerade, d.h. nicht um einen Radius gebogen, weiterzuführen, um eine möglichst vollständige Erstarrung der Polymerschicht in der endgültig gewünschten Lage des Mehrschichtverbundes zu ermöglichen und die Flachlage des Substrates zu verbessern.

Es können mindestens einer Schicht der allenfalls mehrschichtig ausgebildeten Polymerlage Additive wie beispielsweise Markiersubstanzen, Farbstoffe, IR-Farbstoffe, UV-Farbstoffe, Fluoreszenzfarbstoffe, Substanzen mit Anti-Stokes-Shift, Sicherheitspigmente, Effektpigmente, Interferenzpigmente, Metallpigmente, etc. zugesetzt werden.

Die Polymerlage kann auch bereichsweise dicker ausgebildet werden. Dies ist mit einer segmentierten Breitschlitzdüse auf besonders einfache Art möglich, indem einzelne Lippensegmente etwas stärker geöffnet werden. Auf diese Art ergibt sich die Möglichkeit, beispielsweise im Bereich der Fenster die Auftragsmenge des Polymers zu erhöhen um stabilere Fenster zu erhalten. Auch über den Streifenbereich, in dem allenfalls ein Wasserzeichen liegt, kann es sich als vorteilhaft erweisen, die Zwischenlage aus Polymer etwas dicker auszugestalten als in benachbarten Bereichen, um die durch das Wasserzeichen bedingte Dickenunterschiede im Papier auszugleichen und gleichzeitig den Kontrastreichtum des Wasserzeichens zu erhalten. Weiter lässt sich in diese Art auf einfache Weise ein taktiles Merkmal erzielen, da die bereichsweise dicker ausgestaltete Polymerlage eine spürbare Verdickung und Versteifung des Substrates in diesem Bereich zur Folge hat. Weiter kann es sich als nützlich erweisen, die Zonen, in welche später die Kanten des Sicherheitsdokumentes zu liegen kommen, etwas dicker auszubilden, da besonders diese Ränder anfällig gegen Verschleiss und Einreissen sind, was durch einen erhöhten Polymereintrag günstig beeinflusst werden kann.

Weiterhin kann beim Produktionsprozess eines erfindungsgemässen Mehrschichtsubstrates zusätzliches Material mit zwischen die Lagen eingearbeitet werden. So ist es beispielsweise denkbar, einen Sicherheitsfaden mit in den Walzenspalt zulaufen zu lassen, der auf diese Art fest zwischen den Einzellagen miteingearbeitet wird. Idealerweise ist der Faden wie für Sicherheitsfäden nicht unüblich mit einem Adhäsiv versehen, und wird so über die temperierte Walze geführt, dass dieser bereits mit der einen Papierlage durch eine Klebeverbindung verbunden wird, wodurch die Gefahr des Abreissens des Fadens beim Eintritt in die Polymerschmelze minimiert wird. Überraschender Weise lassen sich Sicherheitsfäden tatsächlich durch Einlaufenlassen in den Walzenspalt mit verarbeiten, und zwar auch in Fällen, in denen der Schmelzpunkt des Fadenmaterials unter der Massetemperatur der Polymerschmelze beim Austritt aus der Schlitzdüse liegt. Es hat sich gezeigt, dass bei ausreichend kurzer Kontaktzeit, welche bei den angestrebten Produktionsgeschwindigkeiten von über 25 m/min gegeben ist, die Fäden nicht schmelzen. So wurden beispielsweise Sicherheitsfäden aus Polyester sowie auch Sicherheitsfäden aus monoaxial gerecktem Polypropylen (MOPP) bei Geschwindigkeiten von 30 m/min und Schmelzetemperaturen an der Schlitzdüse von 325 °C erfolgreich mitverarbeitet.

In einer bevorzugten Ausführungsform bringt man den Faden über der Fensterposition ein, so dass der Faden im fertigen Produkt im Fenster sichtbar ist. Das Fenster kann dabei ein transparentes Fenster sein, welches aus zwei deckungsgleich übereinandergebrachten Durchbrechungen entstanden ist, es kann sich aber auch um ein halb transparentes Fenster handelt, das einseitig von Papier überdeckt ist, und welches nur aus der Durchbrechung einer einzelnen Papierlage entstanden ist. Im ersten Fall ist der Sicherheitsfaden von beiden Seiten des Dokumentes im Fenster direkt sichtbar, im zweiten Fall ist er nur von der einen Seite des Dokumentes her direkt sichtbar und von der Gegenseite her nur im Durchlicht sichtbar. Selbstverständlich können mehrere Fenster in einem Dokument untergebracht sein, im Fall von halbtransparenten Fenstern können die Überdeckungen sowohl auf der einen wie auf der anderen Seite des Verbundes liegen. Im Letztgenannten Fall ergibt sich unter Verwendung eines Sicherheitsfadens, der durch eine Serie halbtransparenter Fenster geführt wird, bei welchen sich die transparenten Seiten abwechseln, die Möglichkeit, einen Fensterfaden im Dokument zu erhalten, der sowohl segmentweise von der einen wie von der anderen Seite des Dokumentes her sichtbar ist. Die papiermacherische Methode der Einbringung eines Fensterfadens lässt demgegenüber nur zu, dass der Faden segmentweise von einer Seite, nicht aber von der anderen Seite des Dokuments sichtbar ist.

Weiter ist es denkbar, die Papierlagen während oder vor dem Verarbeitungsprozess auf der im Mehrschichtlaminat innenliegenden Seite beispielsweise im Inkjetverfahren zu bedrucken. Auf diese Art entsteht ein im Dokument verborgener, idealerweise individueller Druck, welcher nur in der Durchsicht erkennbar ist und nicht von aussen verfälscht werden kann. Selbstverständlich sind auch weitere Druckverfahren denkbar, die einen nicht individuellen oder aber ebenfalls einen individuellen, während dem Prozess veränderbaren Druck aufbringen. Die Bedruckung kann alternativ oder zusätzlich auch auf der aussenliegenden Papieroberfläche aufgebracht werden. Bevorzugter Weise kommen Offset-Druckwerke zur Anwendung, die auf einfache Weise mit den Stanzwerken 205 synchronisiert werden können.

Weiter ist es möglich, während des Verarbeitungsprozesses in der Nähe des Walzenspaltes Substanzen wie beispielsweise Melierfasern, Planchetten, Pigmente, Farbstoffe, Metallfasern, Metallflocken, etc. einzustreuen, aufzusprühen oder aufzublasen. Dies kann sowohl bei einer wie bei beiden Papierlagen geschehen, es kann aber alternativ oder zusätzlich auch an der Schmelzfahne geschehen.

Weiter ist es möglich, während des Verarbeitungsprozesses auf die Papierbahn Objekte aufzuspenden oder aufgespendet auf einem Träger zulaufen zu lassen, beispielsweise elektronische Schwingkreise, Transponder, elektronische Chips, RFID-Chips, elektrisch leitfähige Strukturen, wie beispielsweise gedruckte, geätzte oder abgelegte Spulen oder Antennen, Metallplättchen, Magnetpartikel, etc.

In einem bevorzugten Prozess erfolgt der Eintrag der schmelzflüssigen Polymerlage über einen Schmelzevorhang, der aus einer Schlitzdüse, welche in einem bestimmten Abstand zur Papieroberfläche steht, aufextrudiert wird.

In einer alternativen Produktionsvariante erfolgt der Eintrag der schmelzflüssigen Polymerlage über eine Schlitzdüse, welche in unmittelbarem Kontakt zu der Papierlage steht. Auf diese Art lässt sich idealerweise eine vollständige Ausfüllung der durchgehenden Durchbrechungen in der Papierlage mit Polymer erreichen, während die Auftragsmenge auf der übrigen Papierlage geringer ausfällt.

In einer weiteren Produktionsvariante erfolgt der Eintrag der schmelzflüssigen Polymerlage über eine Auftragswalze, beispielsweise unter Verwendung eines Dreiwalzenwerkes, wie sie aus der Beschichtungstechnik bekannt sind. In einer alternativen Produktionsvariante erfolgt der Eintrag der schmelzflüssigen Polymerlage über eine Gravurwalze, wie sie aus der Beschichtungstechnik bekannt sind. In einer alternativen Produktionsvariante erfolgt der Eintrag der schmelzflüssigen Polymerlage über eine Siebdruckwalze, wie sie aus der Beschichtungstechnik bekannt sind.

Die schmelzflüssige Polymerlage kann zumindest bereichsweise unterbrochen sein.

Bei der schmelzflüssigen Polymerlage kann es sich um ein Präpolymer, eine Polymerdispersion oder eine Polymerlösung handeln, welche während oder im Anschluss an die Verbindung mit der Papierlage chemisch oder physikalisch aushärtet oder/und ausreagiert oder/und trocknet.

### BEISPIELE

### Beispiel 1

Über zwei temperierte, hochglanzpolierte Stahlwalzen wurde je ein Papier von einem Flächengewicht von 35 g/m² geführt, welches bereichsweise Stanzungen aufwies. Das Walzenpaar wurde zusammengefahren, so dass die beiden Papierbahnen in Kontakt miteinander standen. In den Walzenspalt wurde aus einer Schlitzdüse eine Schmelze aus einem amorphen Polyamid mit einer Schmelzentemperatur von 300 °C gegossen. Die Eintragsmenge betrug ca. 35 g/m². Das Walzenpaar hatte eine Temperatur von 75°C und die Prozessgeschwindigkeit betrug 40 m/min. Es resultierte ein mehrschichtiger Verbund, welcher in Bereichen von überlappenden Stanzungen im Papier Fenster aus Polymer aufwies, und der sich nicht zerstörungsfrei trennen liess. Die Fenster verfügten über eine exzellente Transparenz und eine spiegelglatte Oberfläche. Die Prozessgeschwindigkeit liess sich ohne Veränderung der Qualität des Verbundes und der Fenster auf 70 m/min steigern. Die Eintragsmenge liess sich ebenfalls ohne Veränderung der Qualität des Verbundes und der Fenster auf ca. 25 g/m² reduzieren. Es wurden nach wie vor stabile, ebenmässige Fenster erhalten.

### Vergleichsbeispiel zu Beispiel 1

Zwei Papierlagen von einem Flächengewicht von 35 g/m², welche bereichsweise Stanzungen aufwiesen, wurden mit einer mittig liegenden Folie von ca. 35 µm Dicke aus demselben amorphen Polyamid wie in Beispiel 1 in einer Bandpresse zu einem Laminat verarbeitet. Die Temperatur der Bandpresse betrug 280 °C, die beheizte Strecke hatte eine Länge von ca. 1 m. Nach Durchlaufen der beheizten Strecke wurde das Laminat in heissem Zustand durch ein Kalanderwalzenpaar mit einem Liniendruck von 2100 N/cm gefahren und nachträglich abgekühlt. Um eine ausreichende Verbindung zu erzielen, durften Prozessgeschwindigkeiten von 5 m/min. nicht überschritten werden. Bei höheren Prozessgeschwindigkeiten konnte das fertige Laminat zumindest bereichsweise in einfacher Weise delaminiert werden. Im Bereich überlappender Stanzungen der beiden Papierlagen wurden mit Folie verschlossene Bereiche ausgebildet, auf denen sich deutlich die Gewebestruktur des Trägerbandes abzeichnete. Um diese Strukturierung zu verhindern, wurde in diesen Bereichen hochglanzpoliertes Stahlband von 100 mm Dicke mit zugeführt. Nach erfolgter Laminierung liess sich das Stahlband nicht mehr ohne Zerstörung der Fenster von der Polymerfolie ablösen.

### Beispiel 2

Analog zur Konfiguration von Beispiel 1 wurde ein Verbund hergestellt, wobei als Polymer in diesem Fall aber ein Polyamid 12 (PA12) gewählt wurde. Die Schmelzentemperatur betrug 300 °C, die Eintragsmenge ca. 45 g/m². Das Walzenpaar hatte eine Temperatur von 50-60°C und die Prozessgeschwindigkeit betrug 40 m/min.

Es resultierte ein mehrschichtiger Verbund welcher in Bereichen von überlappenden Stanzungen im Papier Fenster aus Polymer aufwies und der sich nicht zerstörungsfrei trennen liess. Die Fenster verfügten über eine exzellente Transparenz und eine spiegelglatte Oberfläche. Es konnte keine Trübung auf Grund von Kristallisation des PA12 beobachtet werden.

### Beispiel 3

Analog zur Konfiguration von Beispiel 2 wurde ein Verbund hergestellt. Bei einer Papierlage handelte es sich um ein Sicherheitspapier mit Graustufen-Wasserzeichen. Die Schmelzentemperatur betrug 265 °C, die Eintragsmenge wurde von 13 g/m² (Beispiel 3a) bis 35 g/m² (Beispiel 3b) variiert. Das Walzenpaar hatte eine Temperatur von 95 °C und die Prozessgeschwindigkeit betrug 40 m/min. Es resultierte ein mehrschichtiger Verbund, welcher in Bereichen von überlappenden Stanzungen im Papier Fenster aus Polymer aufwies und der sich nicht zerstörungsfrei trennen liess. Die Fenster verfügen über eine exzellente Transparenz und eine spiegelglatte Oberfläche. Es konnte keine Trübung auf Grund von Kristallisation des PA12 beobachtet werden.

### Beispiel 4

Analog zur Konfiguration von Beispiel 2 wurde ein Verbund hergestellt. Bei einer Papierlage handelte es sich um ein Sicherheitspapier mit Graustufen-Wasserzeichen ab einer Rundsieb-Papiermaschine, beim der anderen Papierlage handelte es sich um ein Plain-Papier ohne Wasserzeichen von einer Langsieb-Papiermaschine.

### Beispiel 5

Analog zur Konfiguration von Beispiel 1 wurde ein Verbund hergestellt. Bei einer Papierlage handelte es sich um ein Sicherheitspapier mit Graustufen-Wasserzeichen. Die Schmelzentemperatur betrug 325 °C, die Eintragsmenge wurde von 20-35 g/m² variiert. Das Walzenpaar hatte eine Temperatur von 125°C und die Prozessgeschwindigkeit betrug 30 m/min. Es resultierte ein mehrschichtiger Verbund welcher in Bereichen von überlappenden Stanzungen im Papier Fenster aus Polymer aufwies und der sich nicht zerstörungsfrei trennen liess. Die Fenster verfügen über eine exzellente Transparenz und eine spiegelglatte Oberfläche.

### Messwerte

Eine Gegenüberstellung einiger typischer mechanischer Kennwerte (Mittelwerte aus längs und quer zur Laufrichtung der Papierbahnen gemessenen Werten, Prüfklima 23 °C, 50% relative Feuchte) der in den obgenannten Beispielen hergestellten Mehrschichtverbunde zeigt die nachfolgende Tabelle 2. Typische Kennwerte aus Beispiel 3 und Beispiel 4 sind in Tabelle 3 angegeben. Als Vergleich diente dabei ein Standard Banknoten-Papier (BN-Papier).

**Tabelle 2**

| | Herkömmliches Sicherheitspapier | Beispiel 1 | Vergleichsbeispiel zu Beispiel 1 | Beispiel 2 |
|---|---|---|---|---|
| Flächengewicht [g/m²] | 90 | 106 | 105 | 116 |
| Bruchkraft [N] | 80 | 101 | 125 | 103 |
| Nass-Bruchkraft [N] | 28 | 61 | 64 | 59 |
| Nassfestigkeit [%] | 35 | 60 | 51 | 57 |
| Durchreisswiderstand Elmendorf [mN] | 800 | 1087 | 1170 | 1669 |
| Doppelfalzzahl | 1800 | >5000 | 1623 | >5000 |
| Prozessgeschwindigkeit [m/min] | - | 70 | 5 | 40 |
| Fensterqualität | - | glatt und | matt und | glatt und |
| | | hochtransparent | strukturiert | hochtransparent |
| Vergilbung der Papierlagen | - | unmerklich | merklich | unmerklich |

**Tabelle 3**

| | | **Beispiel 3a** | **Beispiel 3b** | **Beispiel 4** | **Standard BN-Papier** |
|---|---|---|---|---|---|
| Flächengewicht | g/m2 | 100 | 79 | 103 | 90 |
| Polymeranteil | g/m2 | 34 | 13 | 35 | 0 |
| (L25) | | | | | |
| Dicke | µm | 98 | 89 | 106 | 116 |
| Cobb-Wert*) | g/m2 | 13/13 | 14/15 | 23/12 | 40-70 |
| Opazität | % | 89 | 91 | 95 | 94 |
| Berstdruck | kPa | 400 | 310 | 360 | 350 |
| Bruchkraft | längs | 119 | 123 | 103 | 110 |
| | quer | 58 | 41 | 62 | 50 |
| Doppelfalzzahl | längs | > 6000**) | >10'000**) | > 6000**) | 2400 |
| | quer | > 6000**) | 1160 | > 6000**) | 1800 |
| Nassfestigkeit | % | 65 | 57 | 57 | 45 |
| Asche | % | 4.2 | 5.2 | 6.2 | 4.1 |
| Elmendorf | Längs | 1130 | 700 | 1090 | 860 |
| | quer | 1230 | 910 | 1150 | 980 |
| Fensterqualität | | glatt und hochtransparent | glatt und hochtransparent | - | - |
| Vergilbung | | keine | keine | keine | keine |

| | | | | | |
|---|---|---|---|---|---|
| *) Mass für Wasseraufnahmevermögen. Mit tiefen Werten verringert sich die Schmutzanfälligkeit **) Prüfung abgebrochen | | | | | |

### BEZUGSZEICHENLISTE

- 10: Erste Papierlage
- 20: Zweite Papierlage
- 30: Polymerschmelze
- 40: Breitschlitzdüse
- 50: Walzenpaar
- 60: Mehrschichtsubstrat
- 70: Abplattung
- 80: Polymerlage
- 90: Durchbrechung
- 91: Region in welcher die Polymerlage nur einseitig frei liegt
- 100: Sichtfenster
- 110: Wasserzeichen
- 120: Penetrationszone
- 201: Abwickler, non-stop
- 202: Papierbahn
- 203: Zugregelung
- 204: Bahnkantensteuerung
- 205: Stanzwerk
- 206: Absaugung
- 207: Trockner
- 208: Dosiereinrichtung
- 209: Extruder
- 210: Infrarot-Heizstrahler
- 211: Schlitzdüse
- 212: Abwickler/Spleisser
- 213: Wassermarken-Leser
- 214: Sicherheitspapierbahn, Wasserzeichenpapier
- 215: Bahninspektion-Endkontrolle
- 216: Ink-Jet-Markierung
- 217: Bahnspeicher/Schneidtisch
- 218: Aufrollung

## Patentansprüche

1. Verfahren zur Herstellung eines Mehrschichtsubstrates (60), insbesondere als Druckträger wie Sicherheitspapier, umfassend wenigstens eine erste Papierlage (10, 202), wenigstens eine zweite Papierlage (20, 214), sowie wenigstens eine, zwischen den Papierlagen (10,20, 202, 214) angeordnete und mit den Papierlagen (10,20, 202, 214) verbundene Kunststoffschicht (80) aus wenigstens einem thermoplastischen polymeren Material,
**dadurch gekennzeichnet, dass**
die Kunststoffschicht (80) in schmelzflüssigem Zustand zwischen die Papierlagen (10,20, 202, 214) zugeführt wird, und die Papierlagen (10,20, 202, 214) anschliessend zwischen einem Walzenpaar (50) in einem kontinuierlichen Prozess gepresst werden, wobei das Walzenpaar (50) auf einer Temperatur oberhalb der Raumtemperatur aber unterhalb der Temperatur der zugeführten Schmelze der für die Kunststoffschicht verwendeten Materialien gehalten wird, und wobei eine stoffschlüssige Verbindung zwischen den Papierlagen (10,20, 202, 204) und der Kunststoffschicht (80) unter Ausbildung einer Penetrationszone, in welcher Teile der Kunststoffschicht (80) mit der Masse des Faserverbundes der Papierlagen (10,20, 202, 214) verbunden sind, ergibt, und wobei die Kunststoffschicht (80) mehr als 20 g/m² und höchstens 100 g/m² Flächengewicht aufweist.

2. Verfahren nach Anspruch 1, **dadurch gekennzeichnet, dass** die Kunststoffschicht (80) mit einem Flächengewicht von 22-80g/m² aufgetragen wird.

3. Verfahren nach einem der vorhergehenden Ansprüche, **dadurch gekennzeichnet, dass** die Kunststoffschicht (80) mit einem Flächengewicht von 25-40 g/m² eingetragen wird.

4. Verfahren nach einem der vorhergehenden Ansprüche, **dadurch gekennzeichnet, dass** wenigstens eine, bevorzugt beide Papierlagen (10, 20, 202, 214) im Mittel gleich dick oder bevorzugtermassen dicker sind als die Kunststofflage (80).

5. Verfahren nach einem der vorhergehenden Ansprüche, **dadurch gekennzeichnet, dass** wenigstens eine der Papierlagen (10, 20, 202, 214) wenigstens eine bereichsweise durchgehende Aussparung (90) aufweist.

6. Verfahren nach Anspruch 5, **dadurch gekennzeichnet, dass** beide Papierlagen (10, 20, 202, 214) jeweils durchgehende Aussparungen (90) aufweisen, und diese Aussparungen (90) derart registriert zugeführt werden, dass sich wenigstens bereichsweise Sichtfenster (100) ausbilden, wobei die Sichtfenster (100) bevorzugt wenigstens durchscheinend oder insbesondere bevorzugt vollständig transparent sind.

7. Verfahren nach Anspruch 5 oder 6, **dadurch gekennzeichnet, dass** beide Papierlagen (10, 20, 202, 214) jeweils durchgehende Aussparungen (90) aufweisen, und diese Aussparungen (90) derart registriert zugeführt werden, dass sich wenigstens bereichsweise Regionen (91) ausbilden, in welchen die Kunststoffschicht (80) nur einseitig frei liegt.

8. Verfahren nach einem der vorhergehenden Ansprüche, **dadurch gekennzeichnet, dass** es sich beim thermoplastischen polymeren Material der Kunststoffschicht (80) um ein transparentes Material handelt.

9. Verfahren nach einem der vorhergehenden Ansprüche, **dadurch gekennzeichnet, dass** es sich beim thermoplastischen polymeren Material der Kunststoffschicht (80) um Polyethylen (PE), Polypropylen (PP), Polyvinylchlorid (PVC), weich-PVC (PVC-P), Polystyrol (PS), Polycarbonat (PC), Polymethylmethacrylat (PMMA), Polyoxymethylen (POM), Polyethylenterephthalat (PET), Polyester, co-Polyester, Polyetheretherketon (PEEK), Polyamid, insbesondere Polyamid 6 (PA6) oder Polyamid 12 (PA12), oder amorphes Co-Polyamid, bevorzugt auf Basis von PA12, oder um Copolymere oder Blends daraus handelt.

10. Verfahren nach einem der vorhergehenden Ansprüche, **dadurch gekennzeichnet, dass** das thermoplastische polymere Material der Kunststoffschicht (80) einen Glasübergangspunkt oberhalb von 0° C, bevorzugt oberhalb von 40° C aufweist.

11. Verfahren nach einem der vorhergehenden Ansprüche, **dadurch gekennzeichnet, dass** das Material der Kunststoffschicht (80) bei einer Schmelzetemperatur, bevorzugt bei Austritt aus der Schlitzdüse, im Bereich von 250-350° zugeführt wird, bevorzugt bei einer Viskosität im Bereich von 50-1000 Pa s, insbesondere bevorzugt bei einer Viskosität im Bereich von 500-1000 Pa s.

12. Verfahren nach einem der vorhergehenden Ansprüche, **dadurch gekennzeichnet, dass** die Herstellung mit einer Prozessgeschwindigkeit von mehr als 70m/min, insbesondere bevorzugt von mehr als 100 m/min erfolgt.

13. Verfahren nach einem der vorhergehenden Ansprüche, **dadurch gekennzeichnet, dass** zwischen dem Walzenpaar (50) ein Liniendruck im Bereich von 0-500 N/cm, bevorzugterweise im Bereich von 250-450 N/cm angelegt wird.

14. Verfahren nach einem der vorhergehenden Ansprüche, **dadurch gekennzeichnet, dass** das Walzenpaar (50) auf einer Temperatur oberhalb der Raumtemperatur aber unterhalb der Schmelztemperatur resp. unterhalb des Glasübergangspunktes der für die Kunststoffschicht verwendeten Materialien gehalten wird.

15. Verfahren nach einem der vorhergehenden Ansprüche, **dadurch gekennzeichnet, dass** das Walzenpaar (50) auf eine Temperatur T im Bereich von T = 50 - 100°C oder von T = 50 - 180°C, bevorzugtermassen im Bereich von T_{g} + 50°C > T > T_{g} - 50°C, bevorzugt im Bereich von T_{g} + 30°C > T > T_{g} - 30 °C, insbesondere bevorzugt im Bereich von T_{g}> T > T_{g} - 30 °C resp. im Bereich von T > Tₘ -150 °C, bevorzugt im Bereich von T > Tₘ -100 °C, insbesondere bevorzugt im Bereich von Tₘ>T>Tₘ-100 °C temperiert wird.

16. Verfahren nach einem der vorhergehenden Ansprüche, **dadurch gekennzeichnet, dass** die Penetrationszonen (120) eine mittlere Dicke im Bereich von 5-30 µm, insbesondere bevorzugt im Bereich von 10-20 µm aufweisen.

17. Verfahren nach einem der vorhergehenden Ansprüche, **dadurch gekennzeichnet, dass** es sich bei wenigstens einer, bevorzugt bei beiden der Walzen (50) um hochglanzpolierte Stahlwalzen handelt.

18. Verfahren nach einem der vorhergehenden Ansprüche, **dadurch gekennzeichnet, dass** es sich bei wenigstens einer, bevorzugt bei beiden Walzen (50) um antiadhäsiv ausgerüstete Walzen handelt.

19. Verfahren nach einem der vorhergehenden Ansprüche, **dadurch gekennzeichnet, dass** es sich bei wenigstens einer, bevorzugt bei beiden Walzen (50) um Walzen mit strukturierter Oberfläche handelt.

20. Verfahren nach einem der vorhergehenden Ansprüche, **dadurch gekennzeichnet, dass** es sich bei wenigstens einer, bevorzugt bei beiden Walzen (50) um Gravurwalzen handelt.

21. Verfahren nach einem der vorhergehenden Ansprüche, **dadurch gekennzeichnet, dass** es sich bei wenigstens einer, bevorzugt bei beiden Walzen (50) um Walzen mit duktiler Oberfläche handelt.

22. Verfahren nach einem der vorhergehenden Ansprüche, **dadurch gekennzeichnet, dass** wenigstens eine, bevorzugt beide Papierlagen (10, 20, 202, 214) im wesentlichen unmittelbar vor der Zuführung der Kunststoffschicht (80) insbesondere bevorzugt auf der der Kunststoffschicht (80) zugewandten Seite erwärmt werden, bevorzugtermassen mittels Heissluftgebläsen und/oder Infrarot-Strahlern und/oder in einem Wärmekanal und/oder über einen Heiztisch und/oder über eine oder mehrere beheizte (Kalander-)Walzen.

23. Verfahren nach einem der vorhergehenden Ansprüche, **dadurch gekennzeichnet, dass** wenigstens eine der Papierlagen (10, 20, 202, 214) wenigstens ein Sicherheitsmerkmal (110), bevorzugt ausgewählt aus der Gruppe: Wasserzeichen, insbesondere Graustufen-Wasserzeichen, Sicherheitsfaden, OVD, Melierfasern, Sicherheitspigmente, irisierende Farbapplikationen, Chip, insbesondere RFID-Chip, Transponder, Magnetstreifen, aufweisen.

24. Verfahren nach einem der vorhergehenden Ansprüche, **dadurch gekennzeichnet, dass** die Kunststoffschicht (80) wenigstens ein Sicherheitsmerkmal aufweist, bevorzugtermassen ausgewählt aus der Gruppe: Melierfasern, Planchetten, Metallfasern, Markierungsstoffe, IR- oder UV-Farbstoffe, Sicherheitspigmente, Fluoreszenzfarbstoffe, Effektpigmente, Interferenzpigmente, Metallpigmente, Reaktivfarbstoffe, UV-Absorber, Stabilisatoren, wobei diese Sicherheitsmerkmale als Additive der Schmelze beigegeben oder in der Nähe des Walzenspaltes eingestreut werden.

25. Verfahren nach einem der vorhergehenden Ansprüche, **dadurch gekennzeichnet, dass** die Kunststoffschicht (80) wenigstens ein Sicherheitsmerkmal in Form eines Sicherheitsfadens aufweist, wobei der Sicherheitsfaden in den Walzenspalt geführt wird.

26. Verfahren nach einem der vorhergehenden Ansprüche, **dadurch gekennzeichnet, dass** beide Papierlagen (10, 20, 202, 214) jeweils durchgehende Aussparungen (90) aufweisen, und diese Aussparungen (90) derart registriert zugeführt werden, dass sich wenigstens bereichsweise Sichtfenster (100) und/oder Regionen (91) ausbilden, in welchen die Kunststoffschicht (80) nur einseitig frei liegt, und dass die Kunststoffschicht (80) wenigstens ein Sicherheitsmerkmal in Form eines Sicherheitsfadens aufweist, wobei der Sicherheitsfaden in den Walzenspalt geführt wird, und wobei der Sicherheitsfaden in den Sichtfenstern (100) und/oder Regionen (91) im endgültigen Mehrschichtsubstrat (60) in Aufsicht sichtbar ist, wobei insbesondere bevorzugt die Regionen (91), in welchen die Kunststoffschicht (80) nur einseitig frei liegt, derart registriert bevorzugt in Verlaufsrichtung des Sicherheitsfadens alternierend auf Ober- und Unterseite des Mehrschichtsubstrates (60) angeordnet sind, dass der Sicherheitsfaden als Window-Faden von beiden Seiten in Aufsicht sichtbar ist.

27. Verfahren nach einem der vorhergehenden Ansprüche, **dadurch gekennzeichnet, dass** wenigstens ein Sicherheitsmerkmal maschinenlesbar ist.

28. Verfahren nach einem der vorhergehenden Ansprüche, **dadurch gekennzeichnet, dass** der Eintrag der schmelzflüssigen Polymerlage über eine Schlitzdüse (40), welche in unmittelbaren Kontakt zur Papierlagen (10, 20, 292, 214) steht, erfolgt.

29. Verfahren nach einem der vorhergehenden Ansprüche, **dadurch gekennzeichnet, dass** der Eintrag der schmelzflüssigen Polymerlage über eine Gravurwalze, eine Siebdruckwalze oder eine Auftragswalze, insbesondere unter Verwendung eines Dreiwalzenwerkes, erfolgt.

30. Verfahren nach einem der vorhergehenden Ansprüche, **dadurch gekennzeichnet, dass** die Kunststoffschicht (80) ganzflächig über die gesamte Fläche der beiden Papierlagen (10, 20, 202, 214) ausgebildet wird.

31. Verfahren nach einem der vorhergehenden Ansprüche, **dadurch gekennzeichnet, dass** das Material (30) der Kunststoffschicht (80) als Präpolymer, welches während oder im Anschluss an die Verbindung mit den Papierlagen (10, 20) chemisch oder physikalisch aushärtet oder/und ausreagiert und/oder geliert, zugeführt wird.

32. Mehrschichtsubstrat (60) herstellbar nach einem Verfahren gemäss einem der vorhergehenden Ansprüche.

33. Mehrschichtsubstrat (60) hergestellt nach einem Verfahren gemäss einem der vorhergehenden Ansprüche.

34. Mehrschichtsubstrat (60) nach einem der Ansprüche 32 oder 33, **dadurch gekennzeichnet, dass** wenigstens eine der Papierlagen (10, 20, 202, 214) wenigstens eine bereichsweise durchgehende Aussparung (90) aufweist, wobei diese bevorzugtermassen beide Papierlagen (10, 20, 202, 214) jeweils durchgehende Aussparungen (90) aufweisen, und diese Aussparungen (90) derart registriert zugeführt werden, dass sich wenigstens bereichsweise Sichtfenster (100) und/oder Regionen (91), in welchen die Kunststoffschicht (80) nur einseitig frei liegt, ausbilden, und dass im Kantenbereich der Aussparungen (90) Abplattungen (70) vorhanden sind.

35. Mehrschichtsubstrat (60) nach einem der Ansprüche 32 bis 34, **dadurch gekennzeichnet, dass** beide Papierlagen (10, 20, 202, 214) jeweils durchgehende Aussparungen (90) aufweisen, und diese Aussparungen (90) derart registriert zugeführt werden, dass sich wenigstens bereichsweise Sichtfenster (100) und/oder Regionen (91) ausbilden, in welchen die Kunststoffschicht (80) nur einseitig frei liegt, und dass die Kunststoffschicht (80) wenigstens ein Sicherheitsmerkmal in Form eines Sicherheitsfadens aufweist, wobei der Sicherheitsfaden in den Sichtfenstern (100) und/oder Regionen (91) im endgültigen Mehrschichtsubstrat (60) in Aufsicht sichtbar ist, wobei insbesondere bevorzugt die Regionen (91), in welchen die Kunststoffschicht (80) nur einseitig frei liegt, derart registriert bevorzugt in Verlaufsrichtung des Sicherheitsfadens alternierend auf Ober- und Unterseite des Mehrschichtsubstrates (60) angeordnet sind, dass der Sicherheitsfaden als Window-Faden von beiden Seiten in Aufsicht sichtbar ist

36. Mehrschichtsubstrat (60) nach einem der Ansprüche 32-35, **dadurch gekennzeichnet, dass** es sich beim thermoplastischen polymeren Material der Kunststoffschicht (80) um ein transparentes Material handelt, und dass in Bereichen von Sichtsfenstern (100) diese hochtransparent sind und eine glatte Oberfläche aufweisen.

37. Mehrschichtsubstrat (60) nach einem der Ansprüche 32-36, **dadurch gekennzeichnet, dass** es sich beim Material der Kunststoffschicht um ein amorphes Polyamid handelt, bevorzugt mit einem Glasübergangspunkt oberhalb von 20°C, insbesondere bevorzugt ist ein Polyamid 12 und/oder ein amorphes Copolyamid 12.

38. Mehrschichtsubstrat (60) nach einem der Ansprüche 32-37, **dadurch gekennzeichnet, dass** die Papierschichten ein Flächengewicht im Bereich von 5-500 g/m², bevorzugt im Bereich von 10 - 80 g/m², insbesondere bevorzugt im Bereich von 20-40 g/m² aufweisen.

39. Mehrschichtsubstrat (60) nach einem der Ansprüche 32-38, **dadurch gekennzeichnet, dass** es eine Doppelfalzzahl von mehr als 1800 insbesondere von mehr als 5000 aufweist.

40. Verwendung eines Mehrschichtsubstrates (60) nach einem der Ansprüche 32-39 als Abdeckmaterial, Verpackungsmaterial, Kartenmaterial, Sicherheitspapier, insbesondere als Banknote, Scheck, Ticket, Zertifikat, Aktiendokument, Obligationendokument, Urkunde, Ausweisdokument, Zutrittsdokument.

## Claims

1. A method for the production of a multilayer substrate (60), in particular as a print carrier like a security paper, comprising at least one first paper layer (10, 202), at least one second paper layer (20, 214) and at least one plastics layer (80) of at least one thermoplastic polymer material arranged between the paper layers (10, 20, 202, 214) and joined to the paper layers (10, 20, 202, 214),
**characterized in that** the plastics layer (80) is fed in between the paper layers (10, 20, 202, 214) in the molten state, and the paper layers (10, 20, 202, 214) are then pressed between a pair of rolls (50) in a continuous process, wherein the pair of rolls (50) is kept at a temperature above room temperature but below the temperature of the supplied melt of the materials used for the plastics layer, the result being a cohesive connection between the paper layers (10, 20, 202, 204) and the plastics layer (80), forming a penetration zone in which parts of the plastics layer (80) are joined to the mass of the fiber composite of the paper layers (10, 20, 202, 214), and the plastics layer (80) having a weight per unit area of more than 20 g/m² and at most 100 g/m².

2. The method as claimed in claim 1, **characterized in that** the plastics layer (80) is applied with a weight per unit area of 22-80 g/m².

3. The method as claimed in one of the preceding claims, **characterized in that** the plastics layer (80) is applied with a weight per unit area of 25-40 g/m².

4. The method as claimed in one of the preceding claims, **characterized in that** at least one paper layer, preferably both paper layers (10, 20, 202, 214), is on average as thick as or preferably thicker than the plastics layer (80).

5. The method as claimed in one of the preceding claims, **characterized in that** at least one of the paper layers (10, 20, 202, 214) has at least one cutout (90) that is fully penetrating in some regions.

6. The method as claimed in claim 5, **characterized in that** both paper layers (10, 20, 202, 214) each have fully penetrating cutouts (90), and these cutouts (90) are supplied in a registered manner such that, at least in some regions, viewing windows (100) are formed, the viewing windows preferably being at least translucent or in particular preferably completely transparent.

7. The method as claimed in claim 5 or 6, **characterized in that** both paper layers (10, 20, 202, 214) each have fully penetrating cutouts (90), and these cutouts (90) are supplied in a registered manner such that, at least in some regions, regions (91) are formed in which the plastics layer (80) is exposed only on one side.

8. The method as claimed in one of the preceding claims, **characterized in that** the thermoplastic polymer material of the plastics layer (80) is a transparent material.

9. The method as claimed in one of the preceding claims, **characterized in that** the thermoplastic polymer material of the plastics layer (80) is polyethylene (PE), polypropylene (PP), polyvinyl chloride (PVC), soft PVC (PVC-P), polystyrene (PS), polycarbonate (PC), polymethyl methacrylate (PMMA), polyoxymethylene (POM), polyethylene terephthalate (PET), polyester, co-polyester, polyether ether ketone (PEEK), polyamide, in particular polyamide 6 (PA6) or polyamide 12 (PA12), or amorphous co-polyamide, preferably based on PA12, or copolymers or blends thereof.

10. The method as claimed in one of the preceding claims, **characterized in that** the thermoplastic polymer material of the plastics layer (80) has a glass transition point above 0°C, preferably above 40°C.

11. The method as claimed in one of the preceding claims, **characterized in that** the material of the plastics layer (80) is supplied at a melt temperature in the range from 250-350°, preferably at the outlet from the die, preferably at a viscosity in the range from 50-1000 Pa s, in particular preferably at the viscosity in the range from 500-1000 Pa s.

12. The method as claimed in one of the preceding claims, **characterized in that** the production is carried out at a process speed of more than 70 m/min, in particular preferably more than 100 m/min.

13. The method as claimed in one of the preceding claims, **characterized in that** a line pressure in the range from 0-500 N/cm, preferably in the range from 250-450 N/cm, is applied between the pair of rolls (50).

14. The method as claimed in one of the preceding claims, **characterized in that** the pair of rolls (50) is kept at a temperature above room temperature but below the melt temperature or below the glass transition point respectively of the materials used for the plastics layer.

15. The method as claimed in one of the preceding claims, **characterized in that** the pair of rolls (50) has its temperature controlled to a temperature T in the range from T = 50-100°C or from T = 50-180°C, preferably in the range from T_{g} + 50°C > T > T_{g}-50°C, preferably in the range from T_{g} + 30°C > T > T_{g} - 30°C, in particular preferably in the range from T_{g} > T > T_{g} - 30°C or, respectively, in the range from T > Tₘ - 150°C, preferably in the range from T > Tₘ - 100°C, in particular preferably in the range from Tₘ > T > Tₘ - 100 °C

16. The method as claimed in one of the preceding claims, **characterized in that** the penetration zones (120) have an average thickness in the range from 5-30 µm, in particular preferably in the range from 10-20 µm.

17. The method as claimed in one of the preceding claims, **characterized in that** at least one, preferably both, of the rolls (50) are high-gloss polished steel rolls.

18. The method as claimed in one of the preceding claims, **characterized in that** at least one, preferably both, of the rolls (50) are anti-adhesion finished.

19. The method as claimed in one of the preceding claims, **characterized in that** at least one, preferably both, of the rolls (50) are rolls having a structured surface.

20. The method as claimed in one of the preceding claims, **characterized in that** at least one, preferably both, of the rolls (50) are engraved rolls.

21. The method as claimed in one of the preceding claims, **characterized in that** at least one, preferably both, of the rolls (50) are rolls having a ductile surface.

22. The method as claimed in one of the preceding claims, **characterized in that** at least one paper layer, preferably both paper layers, (10, 20, 202, 214) are heated, substantially immediately before the supply of the plastics layer (80), in particular preferably on the side facing the plastics layer (80), preferably by means of hot air blowers and/or infrared radiators and/or in a heating duct and/or over a heating table and/or over one or more heated (calender) rolls.

23. The method as claimed in one of the preceding claims, **characterized in that** at least one of the paper layers (10, 20, 202, 214) has at least one security feature (110), preferably chosen from the group comprising: watermarks, in particular gray-stage watermarks, security threads, OVD, mottled fibers, security pigments, iridescent ink applications, chips, in particular RFID chips, transponders, magnetic strips.

24. The method as claimed in one of the preceding claims, **characterized in that** the plastics layer (80) has at least one security feature, preferably chosen from the group comprising: mottled fibers, planchettes, metal fibers, marking materials, IR or UV dyes, security pigments, fluorescent dyes, effect pigments, interference pigments, metal pigments, reactive dyes, UV absorbers, stabilizers, these security features being added to the melt as additives or scattered in the vicinity of the roll nip.

25. The method as claimed in one of the preceding claims, **characterized in that** the plastics layer (80) has at least one security feature in the form of a security thread, the security thread being led into the roll nip.

26. The method as claimed in one of the preceding claims, **characterized in that** both paper layers (10, 20, 202, 214) in each case have fully penetrating cutouts (90), and these cutouts (90) are supplied in a registered manner in such a way that, at least in some regions, viewing windows (100) and/or regions (91) are formed in which the plastics layer (80) is exposed only on one side, and **in that** the plastics layer (80) has at least one security feature in the form of a security thread, the security thread being led into the roll nip, and the security threads being visible in top view in the viewing windows (100) and/or regions (91) in the final multilayer substrate (60), the regions (91) in which the plastics layer (80) is exposed only on one side being in particular preferably arranged in a registered manner alternately on the top side and underside of the multilayer substrate (60) preferably in the direction in which the security thread runs, in such a way that the security thread is visible from both sides in top view as a window thread.

27. The method as claimed in one of the preceding claims, **characterized in that** at least one security feature is machine-readable.

28. The method as claimed in one of the preceding claims, **characterized in that** the molten polymer layer is put in via a die (40) which is in immediate contact with the paper layers (10, 20, 202, 214).

29. The method as claimed in one of the preceding claims, **characterized in that** the molten polymer layer is put in via an engraved roll, a screen printing roll or an applicator roll, in particular by using a three-roll unit.

30. The method as claimed in one of the preceding claims, **characterized in that** the plastics layer (80) is formed over substantially the entire area of the two paper layers (10, 20, 202, 214).

31. The method as claimed in one of the preceding claims, **characterized in that** the material (30) of the plastics layer (80) is supplied as a prepolymer which, during or following the connection to the paper layers (10, 20), cures chemically or physically and/or reacts and/or gels.

32. A multilayer substrate (60) which can be produced in accordance with a method as claimed in one of the preceding claims.

33. A multilayer substrate (60) which is produced in accordance with a method as claimed in one of the preceding claims.

34. The multilayer substrate (60) as claimed in either of claims 32 and 33, **characterized in that** at least one of the paper layers (10, 20, 202, 214) has at least one fully penetrating cutout (90) in some regions, these preferably two paper layers (10, 20, 202, 214) each having fully penetrating cutouts (90) and these cutouts (90) being supplied in a registered manner in such a way that viewing windows (100) are formed and/or regions (91) in which the plastics layer (80) is exposed only on one side, at least in some regions, and that there are flattened portions (70) in the edge region (90) of the cutouts.

35. The multilayer substrate (60) as claimed in one of claims 32 to 34, **characterized in that** both paper layers (10, 20, 202, 214) in each case have fully penetrating cutouts (90), and these cutouts (90) are supplied in a registered manner in such a way that, at least in some regions, viewing windows (100) and/or regions (91) are formed in which the plastics layer (80) is exposed only on one side, and **in that** the plastics layer (80) has at least one security feature in the form of a security thread, the security threads being visible in top view in the viewing windows (100) and/or regions (91) in the final multilayer substrate (60), the regions (91) in which the plastics layer (80) is exposed only on one side being in particular preferably arranged in a registered manner alternately on the top side and underside of the multilayer substrate (60) preferably in the direction in which the security thread runs, in such a way that the security thread is visible from both sides in top view as a window thread.

36. The multilayer substrate (60) as claimed in one of claims 32-35, **characterized in that** the thermoplastic polymer material of the plastics layer (80) is a transparent material, and **in that**, in the regions of viewing windows (100), these are highly transparent and have a smooth surface.

37. The multilayer substrate (60) as claimed in one of claims 32-36, **characterized in that** the material of the plastics layer is an amorphous polyamide, preferably having a glass transition point above 20°C, in particular is preferably a polyamide 12 and/or an amorphous co-polyamide 12.

38. The multilayer substrate (60) as claimed in one of claims 32-37, **characterized in that** the paper layers have a weight per unit area in the range from 5-500 g/m², preferably in the range from 10-80 g/m², in particular preferably in the range from 20-40 g/m².

39. The multilayer substrate (60) as claimed in one of claims 32-3389, **characterized in that** it has a double fold number of more than 1800, in particular of more than 5000.

40. Use of a multilayer substrate (60) as claimed in one of claims 32-39 as a covering material, packaging material, card material, security paper, in particular as a banknote, check, ticket, certificate, share document, bond document, deed, identity document, access document.

## Revendications

1. Procédé de fabrication d'un substrat multicouche (60), en particulier prévu comme support d'impression, par exemple un papier de sécurité, comprenant au moins une première couche de papier (10, 202), au moins une deuxième couche de papier (20, 214) ainsi qu'au moins une couche (80) de matière synthétique en au moins un matériau polymère thermoplastique disposée entre les couches de papier (10, 20, 202, 214) et reliée aux couches de papier (10, 20, 202, 214),
**caractérisé en ce que**
la couche de matière synthétique (80) est amenée entre les couches de papier (10, 20, 202, 214) à l'état fondu liquide,
**en ce que** les couches de papier (10, 20, 202, 214) sont ensuite comprimées dans une opération continue entre les deux cylindres d'une paire (50), la paire (50) de cylindres étant maintenue à une température supérieure à la température ambiante mais inférieure à la température des matériaux fondus utilisés pour la couche de matière synthétique, la liaison en correspondance de matière entre les couches de papier (10, 20, 202, 214) et la couche de matière synthétique (80) étant obtenue en formant une zone de pénétration dans laquelle des parties de la couche (80) de matière synthétique sont reliées à la masse du composite fibreux des couches de papier (10, 20, 202, 214), le poids par unité de surface de la couche (80) de matière synthétique étant de plus de 20 g/m² et d'au plus 100 g/m².

2. Procédé selon la revendication 1, **caractérisé en ce que** la couche (80) de matière synthétique est appliquée à un poids par unité de surface de 22 à 80 g/m².

3. Procédé selon l'une des revendications précédentes, **caractérisé en ce que** la couche (80) de matière synthétique est appliquée à un poids par unité de surface de 25 à 40 g/m².

4. Procédé selon l'une des revendications précédentes, **caractérisé en ce qu'**au moins l'une des couches de papier et de préférence les deux couches de papier (10, 20, 202, 214) sont en moyenne de la même épaisseur ou de préférence plus épaisses que la couche de matière synthétique (80).

5. Procédé selon l'une des revendications précédentes, **caractérisé en ce que** certaines parties de la ou les couches de papier (10, 20, 202, 214) sont traversées par au moins une découpe (90).

6. Procédé selon la revendication 5, **caractérisé en ce que** les deux couches de papier (10, 20, 202, 214) sont toutes deux traversées par des découpes (90) et **en ce que** ces découpes (90) sont amenées en correspondance mutuelle de manière à former au moins dans certaines parties des fenêtres d'observation (100), les fenêtres d'observation (100) étant de préférence au moins translucides mais de manière particulièrement préférable complètement transparentes.

7. Procédé selon les revendications 5 ou 6, **caractérisé en ce que** les deux couches de papier (10, 20, 202, 214) sont toutes deux traversées par des découpes (90) et **en ce que** ces découpes (90) se correspondent mutuellement de telle sorte qu'elles forment au moins dans certaines parties des régions (91) dans lesquelles la couche de matière synthétique (80) n'est exposée que sur une face.

8. Procédé selon l'une des revendications précédentes, **caractérisé en ce que** le matériau polymère thermoplastique de la couche de matière synthétique (80) est un matériau transparent.

9. Procédé selon l'une des revendications précédentes, **caractérisé en ce que** le matériau polymère thermoplastique de la couche de matière synthétique (80) est le polyéthylène (PE), le polypropylène (PP), le poly(chlorure de vinyle) (PVC), un PVC plastifié (PVC-P), le polystyrène (PS), la polycarbonate (PC), le poly(méthacrylate de méthyle) (PMMA), le polyoxyméthylène (POM), le poly(téréphtalate d'éthylène) (PET), un polyester, un copolyester, la polyétheréthercétone (PEEK), un polyamide, en particulier le polyamide 6 (PA6), le polyamide 12 (PA12) ou un co-polyamide amorphe, de préférence à base de PA12 ou de copolymère, ou un mélange de ces matériaux.

10. Procédé selon l'une des revendications précédentes, **caractérisé en ce que** le point de transition vitreuse du matériau polymère thermoplastique de la couche de matière synthétique (80) est supérieur à 0°C et de préférence supérieur à 40°C.

11. Procédé selon l'une des revendications précédentes, **caractérisé en ce que** le matériau de la couche (80) de matière synthétique est amené à une température de fusion, de préférence de 250 à 350°, de préférence à la sortie de la tuyère en fente, de préférence à une viscosité comprise dans la plage de 50 à 1 000 Pa.s et de manière particulièrement préférable à une viscosité comprise dans la plage de 500 à 1 000 Pa.s.

12. Procédé selon l'une des revendications précédentes, **caractérisé en ce que** la fabrication s'effectue à une vitesse de traitement de plus de 70 m/min et de manière particulièrement préférable de plus de 100 m/min.

13. Procédé selon l'une des revendications précédentes, **caractérisé en ce qu'**une pression linéaire de l'ordre de 0 à 500 N/cm et de manière préférable dans la plage de 250 à 450 N/cm est appliquée entre les deux cylindres (50).

14. Procédé selon l'une des revendications précédentes, **caractérisé en ce que** la paire (50) de cylindres est maintenue à une température supérieure à la température ambiante et inférieure à la température de fusion ou inférieure à la température de transition vitreuse du matériau utilisé pour la couche de matière synthétique.

15. Procédé selon l'une des revendications précédentes, **caractérisé en ce que** la paire (50) de cylindres est maintenue à une température T comprise dans la plage de T = 50 à 100°C ou de T = 50 à 180°C, de préférence dans la plage de T_{g} + 50°C > T > Tg - 50°C, mieux dans la plage de T_{g} + 30°C > T > T_{g} - 30°C et de manière particulièrement préférable dans la plage de T_{g} > T > T_{g} - 30°C, et dans la plage de T > Tₘ - 150°C, de préférence dans la plage de T > Tₘ - 100°C et de façon particulièrement préférable dans la plage de Tₘ > T > Tₘ - 100°C.

16. Procédé selon l'une des revendications précédentes, **caractérisé en ce que** les zones de pénétration (120) ont une épaisseur moyenne comprise dans la plage de 5 à 30 µm et de façon particulièrement préférable dans la plage de 10 à 20 µm.

17. Procédé selon l'une des revendications précédentes, **caractérisé en ce qu'**au moins l'un des cylindres et de préférence les deux cylindres (50) sont des cylindres en acier poli à haut brillant.

18. Procédé selon l'une des revendications précédentes, **caractérisé en ce qu'**au moins l'un des cylindres et de préférence les deux cylindres (50) sont des cylindres rendus antiadhésif.

19. Procédé selon l'une des revendications précédentes, **caractérisé en ce qu'**au moins l'un des cylindres et de préférence les deux cylindres (50) sont des cylindres à surface structurée.

20. Procédé selon l'une des revendications précédentes, **caractérisé en ce qu'**au moins l'un des cylindres et de préférence les deux cylindres (50) sont des cylindres de gravure.

21. Procédé selon l'une des revendications précédentes, **caractérisé en ce qu'**au moins l'un des cylindres et de préférence les deux cylindres (50) sont des cylindres à surface ductile.

22. Procédé selon l'une des revendications précédentes, **caractérisé en ce qu'**au moins une et de préférence les deux couches de papier (10, 20, 202, 214) sont chauffées essentiellement immédiatement avant l'amenée de la couche de matière synthétique (80), de façon particulièrement préférable sur leur côté tourné vers la couche de matière synthétique (80), de préférence au moyen de ventilateurs à air chaud, de radiants à infrarouge, dans un canal de chauffage, sur une table chauffante et/ou par un ou plusieurs cylindres (de calandre) chauffés.

23. Procédé selon l'une des revendications précédentes, **caractérisé en ce qu'**au moins l'une des couches de papier (10, 20, 202, 214) présente au moins une caractéristique de sécurité (110), de préférence sélectionnée dans l'ensemble constitué des filigranes, en particulier des filigranes à gradation de gris, des fils de sécurité, des OVD, des fibres mélangées, des pigments de sécurité, des applications d'encre irisée, des puces et en particulier des puces RFID, des transpondeurs et des rubans magnétiques.

24. Procédé selon l'une des revendications précédentes, **caractérisé en ce que** la couche de matière synthétique (80) présente au moins une caractéristique de sécurité de préférence sélectionnée dans l'ensemble des fibres mélangées, des plaquettes, des fibres métalliques, des substances de marquage, des colorants IR ou UV, des pigments de sécurité, des colorants fluorescents, des pigments à effet, des pigments à interférence, des pigments métalliques, des colorants réactifs, des agents d'absorption des UV, des agents de stabilisation, ces caractéristiques de sécurité étant ajoutées comme additifs à la matière fondue ou étant incorporées à proximité de l'interstice entre les cylindres.

25. Procédé selon l'une des revendications précédentes, **caractérisé en ce que** la couche de matière synthétique (80) présente au moins une caractéristique de sécurité sous la forme d'un fil de sécurité, le fil de sécurité étant amené dans l'interstice entre les cylindres.

26. Procédé selon l'une des revendications précédentes, **caractérisé en ce que** les deux couches de papier (10, 20, 202, 214) sont toutes deux traversées par des découpes (90), ces découpes (90) étant amenées en correspondance mutuelle de telle sorte qu'elles forment au moins dans certaines parties des fenêtres d'observation (100) et/ou des régions (91) dans lesquelles la couche de matière synthétique (80) n'est exposée que d'un côté, et **en ce que** la couche de matière synthétique (80) présente au moins une caractéristique de sécurité sous la forme d'un fil de sécurité, le fil de sécurité étant amené dans l'interstice entre les cylindres, le fil de sécurité étant visible en plan dans les fenêtres d'observation (100) et/ou les régions (91) du substrat multicouche (60) final, les régions (91) dans lesquelles la couche de matière synthétique (80) n'est exposée que d'un côté étant disposées en correspondance mutuelle en alternance sur le côté supérieur et le côté inférieur du substrat multicouche (60) dans la direction de l'extension du fil de sécurité, de telle sorte que le fil de sécurité soit visible des deux côtés dans une vue en plan comme fil de fenêtre.

27. Procédé selon l'une des revendications précédentes, **caractérisé en ce qu'**au moins une caractéristique de sécurité peut être lue par machine.

28. Procédé selon l'une des revendications précédentes, **caractérisé en ce que** l'introduction de la couche polymère fluide s'effectue par une tuyère en fente (40) en contact direct avec les couches de papier (10, 20, 202, 214).

29. Procédé selon l'une des revendications précédentes, **caractérisé en ce que** l'incorporation de la couche polymère liquide s'effectue par l'intermédiaire d'un cylindre de gravure, d'un cylindre de sérigraphie ou d'un cylindre d'application, en particulier en recourant à un mécanisme à trois cylindres.

30. Procédé selon l'une des revendications précédentes, **caractérisé en ce que** la couche de matière synthétique (80) est formée sur toute la surface des deux couches de papier (10, 20, 202, 214).

31. Procédé selon l'une des revendications précédentes, **caractérisé en ce que** le matériau (30) de la couche de matière synthétique (80) est amené sous la forme d'un prépolymère qui durcit, réagit ou gélifie chimiquement ou physiquement pendant ou après sa liaison aux couches de papier (10, 20).

32. Substrat multicouche (60) apte à être fabriqué par un procédé selon l'une des revendications précédentes.

33. Substrat multicouche (60) fabriqué par un procédé selon l'une des revendications précédentes.

34. Substrat multicouche (60) selon l'une des revendications 32 ou 33, **caractérisé en ce qu'**au moins certaines parties d'une des couches de papier (10, 20, 202, 214) est traversée par une découpe (90), de préférence chacune des deux couches de papier (10, 20, 202, 214) étant traversée par des découpes (90), ces découpes (90) étant mises en correspondance mutuelle de manière à former au moins dans certaines parties des fenêtres d'observation (100) et/ou des régions (91) dans lesquelles la couche de matière synthétique (80) n'est exposée que d'un côté, et **en ce que** des aplatissements (70) sont prévus dans la bordure des découpes (90).

35. Substrat multicouche (60) selon l'une des revendications 32 à 34, **caractérisé en ce que** les deux couches de papier (10, 20, 202, 214) sont toutes deux traversées par des découpes (90), les découpes (90) étant amenées en correspondance mutuelle de telle sorte qu'elles forment au moins dans certaines parties des fenêtres d'observation (100) et/ou des régions (91) dans lesquelles la couche de matière synthétique (80) n'est exposée que d'un côté, et **en ce que** la couche de matière synthétique (80) présente au moins une caractéristique de sécurité sous la forme d'un fil de sécurité, le fil de sécurité étant visible en plan dans les fenêtres d'observation (100) et/ou les régions (91) du substrat multicouche (60) final, les régions (91) dans lesquelles la couche de matière synthétique (80) n'est exposée que d'un côté étant de manière particulièrement préférable mise en correspondance de préférence dans la direction d'extension du fil de sécurité en alternance sur le côté supérieur et le côté inférieur du substrat multicouche (60), de telle sorte que le fil de sécurité soit visible des deux côtés dans une vue en plan comme fil de fenêtre.

36. Substrat multicouche (60) selon l'une des revendications 32 à 35, **caractérisé en ce que** le matériau polymère thermoplastique de la couche de matière synthétique (80) est un matériau transparent et **en ce que** dans les zones occupées par les fenêtres transparentes (100), ce matériau est très transparent et présente une surface lisse.

37. Substrat multicouche (60) selon l'une des revendications 32 à 36, **caractérisé en ce que** le matériau de la couche synthétique est un polyamide amorphe dont le point de transition vitreuse est de préférence supérieur à 20°C et est de façon particulièrement préférable un polyamide 12 et/ou un copolyamide 12 amorphe.

38. Substrat multicouche (60) selon l'une des revendications 32 à 37, **caractérisé en ce que** le poids par unité de surface des couches de papier est compris dans la plage de 5 à 500 g/m², de préférence dans la plage de 10 à 80 g/m² et de façon particulièrement préférable dans la plage de 20 à 40 g/m².

39. Substrat multicouche (60) selon l'une des revendications 32 à 38, **caractérisé en ce qu'**il présente un indice de double pliage de plus de 1 800 et en particulier de plus de 5 000.

40. Utilisation d'un substrat multicouche (60) selon l'une des revendications 32 à 39 comme matériau de recouvrement, matériau d'emballage, matériau pour cartes ou papier de sécurité, en particulier comme billet de banque, chèque, ticket, certificat, titre commercial, document d'obligation, document officiel, passeport ou document d'accès.
